(19) Europäisches Patentamt
European Patent Office
Office européen des brevets

(11) **EP 2 515 395 B1**

(12) **EUROPÄISCHE PATENTSCHRIFT**

(45) Veröffentlichungstag und Bekanntmachung des Hinweises auf die Patenterteilung:
**25.06.2014 Patentblatt 2014/26**

(51) Int Cl.:
*H01S 3/102* *(2006.01)*    *H01S 3/30* *(2006.01)*
*G01N 21/35* *(2014.01)*    *G01N 21/63* *(2006.01)*
*H01S 3/094* *(2006.01)*    *H01S 3/00* *(2006.01)*

(21) Anmeldenummer: **11162991.1**

(22) Anmeldetag: **19.04.2011**

(54) **Verfahren und Vorrichtung zur Verringerung der Bandbreite der stimulierten Brillouin-Streuung**

Method and device for reducing the bandwidth of stimulated Brillouin scattering

Procédé et dispositif de réduction de la largeur de bande de la diffusion de Brillouin stimulée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.10.2012 Patentblatt 2012/43**

(73) Patentinhaber: **Deutsche Telekom AG**
**53113 Bonn (DE)**

(72) Erfinder: **Schneider, Thomas**
**14552 Michendorf OT Wilhelmshorst (DE)**

(74) Vertreter: **Vossius & Partner**
**Siebertstrasse 4**
**81675 München (DE)**

(56) Entgegenhaltungen:
**DE-A1-102007 058 049**

• **THOMAS SCHNEIDER ET AL: "Comparison of delay enhancement mechanisms for SBS-based slow light systems", OPTICS EXPRESS, Bd. 15, Nr. 15, 1. Januar 2007 (2007-01-01), Seite 9606, XP55005744, ISSN: 1094-4087, DOI: 10.1364/OE. 15.009606**
• **SCHNEIDER TH: "Wavelength and line width measurement of optical sources with femtometre resolution", ELECTRONICS LETTERS, IEE STEVENAGE, GB, Bd. 41, Nr. 22, 27. Oktober 2005 (2005-10-27), Seiten 1234-1235, XP006025581, ISSN: 0013-5194, DOI: 10.1049/EL:20053204**
• **SCHNEIDER T ET AL: "Generation of millimetre-wave signals by stimulated Brillouin scattering for radio over fibre systems", ELECTRONICS LETTERS, IEE STEVENAGE, GB, Bd. 40, Nr. 23, 11. November 2004 (2004-11-11), Seiten 1500-1502, XP006022924, ISSN: 0013-5194, DOI: 10.1049/EL:20046461**

**Beschreibung**

Die vorliegende Erfindung betrifft ein Verfahren und eine Vorrichtung zur Verringerung der Bandbreite der stimulierten Brillouin-Streuung sowie entsprechende Anwendungen, insbesondere Verfahren und Vorrichtungen zur schmalbandigen Filterung, hochauflösenden Spektroskopie und Quasi-Lichtspeicherung.

Die stimulierte Brillouin Streuung (SBS) ist der nichtlineare Effekt der in Standard Einmodenfasern (standard single mode fiber, SSMF) den kleinsten Schwellwert aufweist [1]. Eine schmalbandige Pumpwelle die sich in einer Richtung in der Faser ausbreitet, erzeugt einen schmalbandigen Gewinn für ein gegenläufiges, in der Frequenz verschobenes Signal. Stimulierte Brillouin-Streuung (SBS) ermöglicht die Verstärkung eines sehr schmalen Frequenzbereichs optischer Signale in optischen Fasern (im Folgenden auch kurz "Faser" genannt). Dabei wird eine Pumpwelle einer Frequenz $\omega_P$ in einer Richtung durch eine Faser geleitet, während das Signal in der Gegenrichtung in die Faser eingeleitet wird. Die SBS führt dann zu einem Gewinnspektrum, das im Allgemeinen die Gestalt einer Lorentz-Kurve besitzt. Weist die Faser dabei eine so genannte Brillouin-Verschiebung $\omega_B$ auf, erfolgt die maximale Verstärkung bei der Frequenz $\omega_0 = \omega_P - \omega_B$. Die Halbwertsbreite (im Folgenden "Bandbreite" genannt) des Gewinnspektrums kann jedoch bei Verwendung nur einer Pumpwelle nicht beliebig klein realisiert werden. Die minimal erreichbare Bandbreite des Gewinnspektrums wird "natürliche Bandbreite" $\gamma_0$ genannt.

Bei einer Pumpwellenlänge von 1550nm beträgt die Frequenzverschiebung in SSMF 10 - 11 GHz. Die Bandbreite dieses Gewinns ist mit 10 bis 30 MHz extrem klein. Ist das Spektrum des Signals größer, so wird nur der Teil des Spektrums verstärkt der in die Bandbreite dieses Gewinns passt. Diese Eigenschaft macht die SBS für viele Anwendungen unverzichtbar. Dazu gehören z.B. die hochauflösende Spektroskopie [2, 3], schmalbandige Filter für optische Signale oder Signale im Radiofrequenz- und Terahertz-Bereich [4] und die Quasi-Lichtspeicherung (QLS) [5, 6]. Bei all diesen Anwendungen wird die extrem schmale Bandbreite der SBS ausgenutzt. Bei der hochauflösenden Spektroskopie wird z.B. der schmale SBS-Gewinn mit Hilfe der Frequenzänderung eines elektrischen Signals durch das unbekannte Spektrum geschoben [2]. Die Leistung an einer Photodiode in Abhängigkeit von der Frequenz des elektrischen Signals ist dann äquivalent zum unbekannten Spektrum. Damit lassen sich die Spektren optischer Signale messen, aber auch die Spektren von Millimeter- oder Terahertzsignalen wenn sie vorher durch Modulation in den optischen Bereich gebracht wurden [7]. Die Auflösung des Geräts hängt direkt von der Bandbreite des SBS Gewinns ab und beträgt dementsprechend 10 - 30 MHz. Bei der QLS [5, 6] und den schmalbandigen Filtern [4] werden einzelne spektrale Anteile frequenzselektiv verstärkt. Bei der QLS wird dies z.B. zur Speicherung optischer Pakete verwendet. Die maximal mögliche Speicherzeit ist dabei invers proportional zur Bandbreite des SBS-Gewinns. Umso schmalbandiger der Gewinn, umso größer die erzielbare Speicherzeit.

Alle diese Anwendungen sind durch die natürliche Bandbreite der SBS begrenzt. Diese wiederum hängt von der Lebensdauer der Phononen im Material ab und ist somit eine Funktion mechanischer Materialänderungen wie Temperatur, Druck, Zug usw. Die kleinste mögliche natürliche Bandbreite der SBS in SSMF beträgt 10MHz [8]. Damit ist die Auflösung der Filter und Spektrometer auf 10MHz und die maximale Speicherzeit der QLS auf 100ns begrenzt. Diese 10MHz sind aber nur für große Pumpleistungen erzielbar. Da es sich um einen Verstärkungsprozess handelt, bedeuten große Pumpleistungen aber auch ein starkes zusätzliches Rauschen. Daher erzielt man diese maximalen Ergebnisse nur im Zusammenhang mit einer Verschlechterung der Signalqualität.

In der WO 2009/067973 A1 wird ein Verfahren und System zur Erzeugung von Laserlicht mit einem Spektrum enthaltend verschiedene Bänder beschrieben, wobei von der Trägerfrequenz einer sich im Hauptpfad ausbreitenden Laserstrahlung mindestens ein Seitenband erzeugt wird, wobei das Seitenband mittels eines Strahlteilers in einen Nebenpfad eingekoppelt wird, wobei in zumindest einem der Pfade wiederum Seitenbänder der Strahlung angeregt werden und wobei die Pfade durch einen Koppler wieder zu einem gemeinsamen Strahlengang vereinigt werden, wobei die angeregten Bänder das Spektrum ausbilden. Seitenbänder werden in den Modulatoren erzeugt, wobei ein Teil der Laserstrahlung über ein Faser-Bragg-Gitter und einen Zirkulator auf einen Nebenpfad umgeleitet wird. Die frequenzverschobene Laserstrahlung kann in Faserverstärkern verstärkt werden. In einer Glasfaser können die kombinierten, frequenzverschobenen Pumplichtanteile über SBS Signale aus einem Laser beeinflussen und dieses kann über einen Zirkulator und eine Photodiode detektiert werden.

T. Schneider, R. Henker, K. Lauterbach, M. Junker, "Comparison of delay enhancement mechanisms for SBS-based slow light systems", Opt. Express, Vol. 15, Nr. 15, 9606 (2007) beschreibt zwei Verfahren zur Steigerung der Zeitverzögerung in Langsam-Lichtsystemen, wobei beide Mechanismen auf der Superposition der Brillouin-Verstärkung mit zusätzlichen Verlusten basieren.

DE 10 2007 058 049 A1 betrifft ein Verfahren und ein System zur Erzeugung von Laserlicht mit einem Spektrum, verschiedene Bänder enthaltend, wobei von der Trägerfrequenz einer sich in einem Hauptpfad ausbreitenden Laserstrahlung mindestens ein Seitenband erzeugt wird.

Der vorliegenden Erfindung liegt die Aufgabe zugrunde, ein Verfahren und eine Vorrichtung zur Verringerung der Bandbreite der stimulierten Brillouin-Streuung sowie entsprechende Anwendungen, insbesondere Verfahren und Vorrichtungen zur schmalbandigen Filterung, hochauflösenden Spektroskopie und Quasi-Lichtspeicherung bereitzustellen.

Diese Aufgabe wird mit den Merkmalen der vorliegenden Patentansprüche gelöst.

Ein Verfahren und eine Vorrichtung zur Lösung der gestellten Aufgabe ist in den unabhängigen Ansprüchen 1 und 10 definiert, vorteilhafte Ausbildungsformen in den Ansprüchen 2-9 und 11-20.

Die vorliegende Erfindung ermöglicht es, SBS Gewinnspektren mit geringerer Bandbreite $\gamma$ als die natürliche Bandbreite $\gamma_0$ zu erzeugen. Weiterhin kann mit der vorliegenden Erfindung die Effizienz einer Reihe von Anwendungen, etwa schmalbandiger Filterung, hochauflösender Spektroskopie oder Quasi-Lichtspeicherung, deutlich gesteigert werden.

Die Grundidee der Erfindung ist folgende:

Während bei der oben beschriebenen Vorgehensweise einer Pumpwelle der Frequenz $\omega_P = \omega_0 + \omega_B$ Leistung entzogen wird und zur Verstärkung des Frequenzbandes um $\omega_0$ benutzt wird, kann auch umgekehrt dem Frequenzband um $\omega_0$ Leistung entzogen werden, indem - wiederum in Gegenrichtung zum Signal - eine optische Welle der Frequenz $\omega'_P = \omega_0 - \omega_B$ in die Faser geleitet wird. Dies führt dann zu einem Verlustspektrum, das im Allgemeinen die Form einer (negativen) Lorentz-Kurve mit einem Minimum bei der Frequenz $\omega_0$ besitzt.

Um ein Verlustspektrum zu erzeugen, dessen Minimum gegenüber der Frequenz $\omega_0$ um den Frequenzunterschied $\delta/2$ zu niedrigeren oder höheren Frequenzen hin verschoben ist, strahlt man entsprechend eine optische Welle der Frequenz $\omega'_P - \delta/2$ bzw. $\omega'_P + \delta/2$ in die Faser ein. Überlagert man nun ein Gewinnspektrum mit Maximum bei $\omega_0$ auf der Frequenzachse mit einem Verlustspektrum mit Minimum bei $\omega_0 - \delta/2$ und/oder einem Verlustspektrum mit Minimum bei $\omega_0 + \delta/2$, so erhält man ein Gesamtspektrum, das ein zumindest lokales Maximum bei $\omega_0$ besitzt, dessen Bandbreite $\gamma$ geringer als die natürliche Bandbreite $\gamma_0$ ist, wenn ein Frequenzunterschied $\delta/2$ geeigneter Größe eingestellt wird. Die Größe der Amplituden für das Gewinn und die Verlustspektren beeinflusst ebenfalls die Gestalt des Gesamtspektrums. Insbesondere kann die Bandbreite des Gesamtspektrums durch Einstellen der Intensitäten der optischen Wellen verringert werden, die in die Faser zum Erzeugen des SBS Gewinnspektrums einerseits sowie zum Erzeugen der SBS Verlustspektren anderseits eingeleitet werden.

Gemäß der vorliegenden Erfindung wird ein Verfahren zur Verringerung der Bandbreite der SBS vorgestellt, welches auf der Überlagerung zwischen dem natürlichen Brillouin Gewinn mit zwei Verlusten beruht. In einer optischen Faser, vorzugsweise einer standard single-mode fiber (SSMF), erzeugt eine Pumpwelle einen schmalbandigen Gewinn für ein gegenläufiges Signal, wenn dieses in der Frequenz gegenüber der Pumpwelle um die so genannte Brillouin-Verschiebung nach unten verschoben ist. Ist das Signal hingegen in der Frequenz um die Brillouin-Verschiebung nach oben verschoben, so erzeugt die Pumpwelle einen schmalbandigen Verlust im Signalspektrum. Bei einer Pumpwellenlänge von beispielsweise 1550nm betragen die full-width-at-half-maximum- (FWHM) Bandbreite des Gewinns und Verlusts 10 - 30MHz und die Brillouin-Verschiebung 10 - 11 GHz. Der mit den beiden Verlusten in der Faser überlagerte Gewinn kann geschrieben werden als:

$$G_{ges} = \frac{g_0\gamma_0^2}{\omega^2 + \gamma_0^2} - \frac{g_1\gamma_0^2}{(\omega + \delta/2)^2 + \gamma_0^2} - \frac{g_1\gamma_0^2}{(\omega - \delta/2)^2 + \gamma_0^2} \tag{1}$$

Hierbei ist $g_0$ das Maximum des Gewinns, $g_1$ das Maximum des Verlusts, $\gamma_0$ ist die FWHM Bandbreite des Gewinns und Verlusts und $\delta$ ist der Frequenzabstand zwischen den Zentren der Verluste. Wird Gleichung (1) mit $\Omega = \omega/\gamma_0$; $m = g_1/g_0$ und $d = \delta/(2\gamma_0)$ normiert, so ergibt sich:

$$G_{Nges} = g_0\left( \frac{1}{\Omega^2 + 1} - \frac{m}{(\Omega + d)^2 + 1} - \frac{m}{(\Omega - d)^2 + 1} \right) \tag{2}$$

Eine derartige Superposition wurde bereits in Referenz [9] beschrieben. Dort wurde sie dazu benutzt, die Verzögerungszeiten für das so genannte SBS basierte Slow-Light zu vergrößern. Beim Slow-Light hängt die Verzögerungszeit vom Gradienten des Gewinnspektrums ab. Die beiden Verluste an den Seiten des Gewinnspektrums führen zu einer Vergrößerung des Gradienten und damit zu einer Vergrößerung der möglichen Verzögerungszeiten. Die Bandbreite darf für diese Anwendung jedoch nicht verringert werden, da dadurch die verzögerten Signale starke Verzerrungen erfahren würden. Im Gegensatz dazu spielt bei den Anwendungen hier die Zunahme des Gradienten keine Rolle und die Bandbreite wird gezielt durch eine Veränderung des Parameters d in Gleichung (2) verändert. In diesem Zusammenhang wird auch auf die WO 2009/067973 A1 verwiesen.

Ein Aspekt der Erfindung betrifft ein Verfahren zur Verringerung der Bandbreite stimulierter Brillouin-Streuung (SBS) bei der Frequenz $\omega_0$ in einer optischen Faser, die eine natürliche Brillouin-Verschiebung $\omega_B$ aufweist. Das Verfahren weist folgende Schritte auf: Es wird eine erste optische Welle der Frequenz $\omega_P = \omega_0 + \omega_B$ mit einer ersten Einrichtung bereitgestellt und zu einem ersten Eingang eines ersten Kopplers geleitet. Der Koppler weist einen Ausgang auf, der mit der genannten optischen Faser verbindbar ist. Weiterhin wird eine zweite optische Welle der Frequenz $\omega'_P = \omega_0 - \omega_B$ mit einer zweiten Einrichtung bereitgestellt und zu einem ersten Modulator geleitet. Der erste Modulator transformiert die zweite optische Welle in eine dritte, um den Frequenzunterschied $\delta/2$ nach oben verschobene optische Welle der Frequenz $\omega'_P + \delta/2$ und eine vierte, um den Frequenzunterschied $\delta/2$ nach unten verschobene optische Welle der Frequenz $\omega'_P - \delta/2$. Beide transformierte optische Wellen, die dritte optische Welle und die vierte optische Welle werden zu einem zweiten Eingang des ersten Kopplers geleitet. Der erste Koppler gibt die erste optische Welle, die dritte optische Welle und die vierte optische Welle an dessen Ausgang aus. Durch Einstellen des Frequenzunterschieds $\delta/2$ wird erreicht, dass beim Anschluss der optischen Faser am Ausgang des ersten Kopplers in der optischen Faser die Superposition des Spektrums des durch die erste optische Welle erzeugten SBS Gewinns mit einem Gewinnmaximum $g_0$ und des Spektrums des durch die dritte optische Welle erzeugten SBS Verlusts mit einem Verlustmaximum $g_1$ und des Spektrums des durch die vierte optische Welle erzeugten SBS Verlusts mit einem Verlustmaximum $g'_1$ ein Gesamtspektrum liefert, das eine kleinere Bandbreite $\gamma$ aufweist als die natürliche Brillouin-Bandbreite $\gamma_0$.

Gemäß einem weiteren Aspekt weist das Verfahren einen zusätzlichen Schritt auf: Einstellen des Verhältnisses der Intensität der ersten optischen Welle zur Intensität der dritten optischen Welle und des Verhältnisses der Intensität der ersten optischen Welle zur Intensität der vierten optischen Welle. Dieses Einstellen geschieht so, dass ein bestimmtes Verhältnis m des Gewinnmaximums $g_0$ zu dem Verlustmaximum $g_1$ bzw. $g'_1$ eingestellt wird und das Gesamtspektrum eine bestimmte Bandbreite $\gamma$ aufweist.

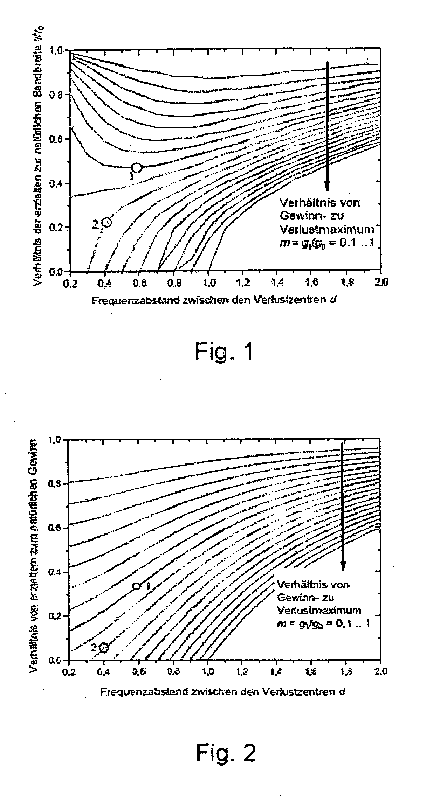

Gemäß einem weiteren Aspekt des Verfahrens wird dabei das Verhältnis d des Frequenzabstands $\delta$ zu der natürlichen Brillouin-Bandbreite $\gamma_0$ in dem Bereich $0,3 \leq d \leq 0,9$ eingestellt. Vorzugsweise wird das Verhältnis $m$ des Gewinnmaximums $g_0$ zu dem Verlustmaximum $g_1$ in dem Bereich $0,1 \leq m \leq 1,0$, vorzugsweise $0,3 \leq m \leq 0,8$ eingestellt. Beispielsweise wird ein Wert d = 0,6 und m = 0,45 eingestellt (siehe Punkt 1 in Figur 1). Als weiteres Beispiel wird ein Wert d = 0,4 und m = 0,55 eingestellt (siehe Punkt 2 in Figur 1).

Gemäß einer weiteren Ausführungsform des Verfahrens erfolgt das Bereitstellen der ersten optischen Welle und das Bereitstellen der zweiten optischen Welle mit den folgenden Schritten: Es wird eine optische Welle der Frequenz $\omega_0$ bereitgestellt, aus der die erste und zweite optische Welle erzeugt wird. Diese optische Welle wird zu einem zweiten Modulator geleitet, der geeignet ist, die optische Welle der Frequenz $\omega_0$ in ein Signal zu transformieren, das die erste optische Welle der Frequenz $\omega_P = \omega_0 + \omega_B$ und die zweite optische Welle der Frequenz $\omega'_P = \omega_0 - \omega_B$ aufweist. Dieses Signal wird vom zweiten Modulator zu einem zweiten Koppler geleitet, der die Leistung des Signals in einen ersten und einen zweiten Signalanteil aufteilt. Der zweite Koppler ist vorzugsweise ein 3dB-Koppler, der die Leistung so aufteilt, dass jeder Signalanteil 50% beträgt. Der erste Signalanteil wird zu einem ersten Filter geleitet, durch den die erste optische Welle passieren kann. Der zweite Signalteil wird zu einem zweiten Filter geleitet, durch den die zweite optische Welle passieren kann. Aus der zweiten optischen Welle werden wie vorstehend beschrieben die dritte und vierte optische Welle gewonnen. Die erste optische Welle wird zu dem ersten Eingang des ersten Kopplers und die dritte sowie vierte optische Welle werden zu dem zweiten Eingang des ersten Kopplers geleitet.

Ein zusätzlicher Aspekt der Erfindung betrifft ein Verfahren zur schmalbandigen optischen Filterung. Wie zuvor beschrieben werden eine erste optische Welle, eine dritte optische Welle und eine vierte optische Welle erzeugt. Die erste optische Welle, die dritte optische Welle und die vierte optische Welle werden in einen Zirkulator eingespeist. Der Zirkulator ist mit einem Anschluss mit einem ersten Ende einer optischen Faser verbindbar, die eine natürliche Brillouin-Verschiebung $\omega_B$ aufweist. Der Zirkulator weist einen weiteren Anschluss auf und ist geeignet, den Frequenzbereich eines Signals, das in der optischen Faser durch die SBS verstärkt wird, auszukoppeln. Ein zu filterndes Signal wird in ein zweites Ende der optischen Faser eingespeist. Da mit dem erfindungsgemäßen Verfahren die Bandbreite der stimulierten Brillouin-Streuung (SBS) verringert werden kann, ist eine schmalbandige optische Filterung möglich.

Gemäß einem weiteren Aspekt der Erfindung wird ein Verfahren zur schmalbandigen Filterung im Millimeterwellen- oder Terahertz-Bereich bereitgestellt. Zunächst erfolgt ein Transformieren eines Millimeterwellen- oder Terahertz-Signals in den optischen Bereich. Das in den optischen Bereich transformierte Signal wird mit dem vorstehend beschriebenen Verfahren zur schmalbandigen optischen Filterung gefiltert. Anschließend erfolgt eine Rücktransformation des gefilterten Signals in den Millimeterwellen- oder Terahertz-Bereich.

Noch ein weiterer Aspekt der Erfindung betrifft ein Verfahren zur hochauflösenden optischen Spektroskopie mit durchstimmbarem optischem Filtern eines schmalbandigen Bereichs aus einem optischen Spektrum mit dem oben beschriebenen Verfahren zur schmalbandigen optischen Filterung. Bei einer Ausführungsform zur optischen Spektroskopie wird eine Einrichtung zum Bereitstellen einer optischen Welle benutzt, vorzugsweise ein durchstimmbarer Laser, aus der die erste, zweite, dritte und vierte optische Welle gewonnen werden. Wenn diese Ausführungsform zur optischen Filterung eingesetzt wird, weist das erfindungsgemäße Verfahren zur hochauflösenden optischen Spektroskopie die folgenden Schritte auf: Die Frequenz der optischen Welle wird verändert und das gefilterte Signal wird mit einem Detektor, vorzugsweise einer Photodiode, die mit dem weiteren Anschluss des Zirkulators verbunden ist, detektiert. Die mit dem Detektor gemessene Intensität des ausgekoppelten Signals wird in Abhängigkeit von der Frequenz der optischen Welle ausgewertet. Bei einer anderen Ausführungsform zur optischen Filterung werden zwei Einrichtungen zum Bereitstellen einer ersten bzw. zweiten optischen Welle benutzt, vorzugsweise ein erster und/oder ein zweiter durchstimmbarer Laser, wobei die Frequenz von beiden Lasern vorzugsweise gleichzeitig und in gleicher Weise verändert wird. Wenn diese andere Ausführungsform zur optischen Filterung eingesetzt wird, weist das erfindungsgemäße Verfahren zur hochauflösenden optischen Spektroskopie die folgenden Schritte auf: Steuern der Frequenz der ersten optischen Welle und der Frequenz der zweiten optischen Welle, Detektieren des gefilterten Signals mit einem Detektor, vorzugsweise einer Photodiode, die mit dem weiteren Anschluss des Zirkulators verbunden ist, Auswerten der mit dem Detektor gemessenen Intensität des ausgekoppelten Signals in Abhängigkeit von der Frequenz der ersten oder zweiten optischen Welle.

Gemäß einem weiteren Aspekt der Erfindung wird ein Verfahren zur hochauflösenden Spektroskopie im Millimeterwellen- oder Terahertz-Bereich bereitgestellt. Zunächst erfolgt ein Transformieren eines Millimeterwellen- oder Terahertz-Signals in den optischen Bereich. Als nächstes erfolgt ein Spektroskopieren des transformierten Signals mit dem vorangehend beschriebenen Verfahren zur hochauflösenden optischen Spektroskopie.

Ein anderer Aspekt der Erfindung betrifft ein Verfahren zur Quasi-Lichtspeicherung mit den Schritten: Es wird ein schmalbandiges Gewinnspektrum mit dem oben beschriebenen Verfahren zur schmalbandigen optischen Filterung oder dem oben beschrieben Verfahren zur schmalbandigen Filterung im Millimeterwellen- oder Terahertz-Bereich erzeugt. Weiterhin wird ein schmalbandiger Gewinnkamm aus dem schmalbandigen Gewinnspektrum durch einen Frequenzkammgenerator erzeugt. Der Gewinnkamm wird in ein System zur Quasi-Lichtspeicherung eingespeist.

Ein Aspekt der Erfindung betrifft eine Vorrichtung zur Verringerung der Bandbreite stimulierter Brillouin-Streuung (SBS) bei der Frequenz $\omega_0$ in einer optischen Faser, die eine natürliche Brillouin-Verschiebung $\omega_B$ aufweist und insbesondere eine Vorrichtung zur Durchführung des oben beschriebenen Verfahrens zur Verringerung der Bandbreite stimulierter Brillouin-Streuung (SBS) bei der Frequenz $\omega_0$ in einer optischen Faser, die eine natürliche Brillouin-Verschiebung $\omega_B$ aufweist. Die erfindungsgemäße Vorrichtung weist eine erste Einrichtung zum Bereistellen einer ersten optischen Welle der Frequenz $\omega_P = \omega_0 + \omega_B$ auf. Die Vorrichtung weist zudem einen ersten Koppler mit einem ersten Eingang, an den die erste optische Welle geleitet wird, und einem Ausgang, der mit der genannten optischen Faser verbindbar ist, auf. Die Vorrichtung weist ferner eine zweite Einrichtung zum Bereitstellen einer zweiten optischen Welle der Frequenz $\omega'_P = \omega_0 - \omega_B$ auf. Zudem weist die Vorrichtung einen ersten Modulator auf, an den die zweite optische Welle geleitet wird, wobei der erste Modulator die zweite optische Welle transformiert in eine dritte, um den Frequenzunterschied $\delta/2$ nach oben verschobene optische Welle der Frequenz $\omega'_P + \delta/2$ und eine vierte, um den Frequenzunterschied $\delta/2$ nach unten verschobene optische Welle der Frequenz $\omega'_P - \delta/2$. Dabei werden die dritte optische Welle und die vierte optische Welle zu einem zweiten Eingang des ersten Kopplers geleitet, und der erste Koppler gibt die erste optische Welle, die dritte optische Welle und die vierte optische Welle an dessen Ausgang aus. Zudem weist die Vorrichtung eine Einrichtung zum Einstellen eines Frequenzunterschieds $\delta/2$ auf, so dass beim Anschluss der optischen Faser am Ausgang des ersten Kopplers in der optischen Faser die Superposition des Spektrums des durch die erste optische Welle erzeugten SBS Gewinns mit einem Gewinnmaximum $g_0$ und des Spektrums des durch die dritte optische Welle erzeugten SBS Verlusts mit einem Verlustmaximum $g_1$ und des Spektrums des durch die vierte optische Welle erzeugten SBS Verlusts mit einem Verlustmaximum $g'_1$ ein Gesamtspektrum liefert, das eine kleinere Bandbreite $\gamma$ aufweist als die natürliche Brillouin-Bandbreite $\gamma_0$.

Gemäß einem weiteren Aspekt der Erfindung ist der erste Koppler variabel und/oder die Vorrichtung weist mindestens einen einstellbaren optischen Verstärker auf, vorzugsweise einen Erbium-dotierten Faserverstärker, durch den die erste und/oder zweite sowie dritte optische Welle zum ersten Eingang bzw. zum zweiten Eingang des ersten Kopplers geleitet werden, zum Einstellen des Verhältnisses der Intensität der ersten optischen Welle zur Intensität der dritten optischen Welle und des Verhältnisses der Intensität der ersten optischen Welle zur Intensität der vierten optischen Welle.

Gemäß einem weiteren Aspekt der Erfindung weist die Einrichtung zum Einstellen des Frequenzunterschieds $\delta/2$ einen Sinusgenerator auf, dessen Frequenz einstellbar ist und der ein Sinussignal an den ersten Modulator ausgibt. Dabei wird der erste Modulator vorzugsweise durch einen Mach-Zehnder-Modulator realisiert, der im "suppressed carrier regime" betrieben wird.

In einer weiteren Ausführungsform weist die erfindungsgemäße Vorrichtung zusätzlich eine Einrichtung zum Bereitstellen einer optischen Welle der Frequenz $\omega_0$ auf sowie einen zweiten Modulator, der die optische Welle empfängt und geeignet ist, die optische Welle der Frequenz $\omega_0$ in ein Signal zu transformieren, das die erste optische Welle der Frequenz $\omega_P = \omega_0 + \omega_B$ und die zweite optische Welle der Frequenz $\omega'_P = \omega_0 - \omega_B$ aufweist. Ferner weist die Vorrichtung einen zweiten Koppler auf, der das transformierte Signal in einen ersten und einen zweiten Signalanteil aufteilt. Ferner weist die Vorrichtung auf: einen ersten Filter, durch den die erste optische Welle passieren kann, und einen zweiten Filter, durch den die zweite optische Welle passieren kann. Vorzugsweise ist dabei die Einrichtung zum Bereistellen der optischen Welle abstimmbar bezüglich der Frequenz wo. Vorzugsweise weist die Vorrichtung zudem eine Einrichtung zum Einstellen der Frequenz $\omega_B$ auf, die vorzugsweise einen Sinusgenerator aufweist, dessen Frequenz einstellbar ist und der ein Sinussignal an den zweiten Modulator ausgibt, wobei der zweite Modulator vorzugsweise durch einen Mach-Zehnder-Modulator realisiert wird, der im "suppressed carrier regime" betrieben wird.

In einer Ausführungsform der erfindungsgemäßen Vorrichtung weist die Einrichtung zum Bereitstellen einer optischen Welle der Frequenz $\omega_0$, die erste Einrichtung zum Bereistellen der ersten optischen Welle und/oder die zweite Einrichtung zum Bereistellen der zweiten optischen Welle eine Laserdiode oder einen Laser auf.

In einer weiteren Ausführungsform der erfindungsgemäßen Vorrichtung weisen die Verbindung zwischen der ersten Einrichtung zum Bereitstellen der ersten optischen Welle und dem ersten Eingang des ersten Kopplers und/oder die Verbindung zwischen der zweiten Einrichtung zum Bereitstellen der zweiten optischen Welle zum ersten Modulator und/oder die Verbindung zwischen dem ersten Modulator und dem zweiten Eingang des ersten Kopplers und/oder die Verbindung zwischen dem zweiten Modulator und dem zweiten Koppler und/oder die Verbindung zwischen dem zweiten Koppler und dem ersten Filter und/oder die Verbindung zwischen dem zweiten Koppler und dem zweiten Filter jeweils eine optische Faser auf.

Ein zusätzlicher Aspekt der Erfindung betrifft ein schmalbandiges optisches Filter mit: einem abstimmbaren Laser, der eine optische Welle der Frequenz $\omega_0$ erzeugt, einer Vorrichtung zur Verringerung der Bandbreite stimulierter Brillouin-Streuung (SBS), die mit dem abstimmbaren Laser verbunden ist und die optische Welle der Frequenz $\omega_0$ erhält, einem Zirkulator, der mit einem Ausgang der oben beschriebenen Vorrichtung zur Bandbreiteverringerung verbunden ist. Dabei ist der Zirkulator mit einem Anschluss mit einem ersten Ende einer optischen Faser verbindbar, die eine natürliche Brillouin-Verschiebung $\omega_B$ aufweist, wobei in ein zweites Ende der optischen Faser ein optisches Signal eingespeist werden kann. Ferner weist der Zirkulator einen weiteren Anschluss auf und ist geeignet, den Frequenzbereich des Signals, der in der optischen Faser durch die SBS verstärkt wird, auszukoppeln.

Ein weiterer Aspekt der Erfindung betrifft ein schmalbandiges Millimeterwellen- oder Terahertz-Filter mit dem vorangehend beschriebenen schmalbandigen optischen Filter mit: einer Einrichtung zum Transformieren eines Millimeterwellen- oder Terahertz-Signals in den optischen Bereich, wobei das in den optischen Bereich transformierte Signal mit Hilfe des schmalbandigen optischen Filters gefiltert wird, und einer Einrichtung zur Rücktransformation des gefilterten Signals in den Millimeterwellen- oder Terahertz-Bereich.

Noch ein weiterer Aspekt der Erfindung betrifft ein hochauflösendes optisches Spektroskop mit dem oben beschriebenen optischen Filter. Je nach Ausführungsform des oben beschriebenen erfindungsgemäßen optischen Filters sind auch für das erfindungsgemäße hochauflösende optische Spektroskop verschiedene Ausführungsformen realisierbar.

In einer Ausführungsform weist das erfindungsgemäße hochauflösende optische Spektroskop auf: einen Detektor, vorzugsweise eine Photodiode, die mit dem weiteren Anschluss des Zirkulators verbunden ist, eine Steuer- und Auswerteeinheit, die mit einer steuerbaren Einrichtung zum Bereitstellen einer optischen Welle, vorzugsweise einem abstimmbaren Laser, und dem Detektor elektrisch verbunden ist. Dabei steuert die Steuer- und Auswerteeinheit die Frequenz $\omega_0$ der vom Laser ausgegebenen optischen Welle und wertet die mit dem Detektor gemessene Intensität des ausgekoppelten Signals in Abhängigkeit von der Frequenz der optischen Welle aus.

In einer anderen Ausführungsform weist das erfindungsgemäße hochauflösende optische Spektroskop auf: einen Detektor, vorzugsweise eine Photodiode, die mit dem weiteren Anschluss des Zirkulators verbunden ist, eine Steuer- und Auswerteeinheit, die mit steuerbaren Einrichtungen zum Bereitstellen einer ersten optischen Welle bzw. einer zweiten optischen Welle, jeweils vorzugsweise abstimmbaren Lasern, und dem Detektor elektrisch verbunden ist. Dabei steuert die Steuer- und Auswerteeinheit die Frequenz der ersten optischen Welle und die Frequenz der zweiten optischen Welle und wertet die mit dem Detektor gemessene Intensität des ausgekoppelten Signals in Abhängigkeit von der Frequenz der ersten oder zweiten optischen Welle aus.

Ein weiterer Aspekt der Erfindung betrifft ein hochauflösendes Spektroskop für den Millimeterwellen- oder Terahertz-Bereich mit dem vorangehend beschriebenen hochauflösenden optischen Spektroskop sowie einer Einrichtung zum Transformieren eines Millimeterwellen- oder Terahertz-Signals in den optischen Bereich.

Ein anderer Aspekt der Erfindung betrifft eine Vorrichtung zur Quasi-Lichtspeicherung mit dem oben beschriebenen schmalbandigen optischen Filter oder dem oben beschriebenen schmalbandigen Millimeterwellen- oder Terahertz-Filter sowie mit einer Einrichtung zum Erzeugen eines schmalbandigen Gewinnkamms aus dem gefilterten Signal und einem System zur Quasi-Lichtspeicherung.

Die Erfindung wird nachstehend anhand von Beispielen und der Zeichnung erläutert. Es zeigen:

Figur 1: Ein Diagramm mit dem auf die natürliche SBS Bandbreite normierten Verhältnis der erzielten Bandbreite als Funktion des Frequenzabstands zwischen den Verlustzentren für 19 verschiedene Verhältnisse von Gewinn- zu Verlustmaximum zwischen 0.1 und 1,

Figur 2: Ein Diagramm mit dem auf den maximalen SBS Gewinn normierten, reduzierten Gewinn als Funktion des Frequenzabstands zwischen den Verlustzentren für 19 verschiedene Verhältnisse von Gewinn- zu Verlustmaximum zwischen 0.1 und 1,

Figur 3 (a): Ein Diagramm mit dem durch Überlagerung mit zwei Verlusten reduzierten SBS Gewinn (durchgezogene Linie) im Vergleich zum natürlichen Gewinn (gestrichelte Linie) für d = 0,6 und m = 0,45 für Punkt 1 in Figur 1,

Figur 3 (b): Ein Diagramm mit dem durch Überlagerung mit zwei Verlusten reduzierten SBS Gewinn (durchgezogene Linie) im Vergleich zum natürlichen Gewinn (gestrichelte Linie) für d = 0.4 und m = 0.55 für Punkt 2 in Figur 1,

Figur 4: Ein Blockdiagramm einer Ausführungsform der Erfindung zur Verringerung der SBS Bandbreite aus einer optischen Quelle,

Figur 5: Ein Blockdiagramm einer weiteren Ausführungsform der Erfindung zur Verringerung der SBS Bandbreite aus zwei optischen Quellen,

Figur 6: Ein Diagramm mit experimentellen Ergebnissen zur Bandbreitenreduktion der SBS. Die Kurve A zeigt den erzielten reduzierten Gewinn von rund 3.4MHz im Vergleich zum natürlichen SBS Gewinn der Faser von rund 20MHz, der Kurve B,

Figur 7: Ein Blockdiagramm einer weiteren Ausführungsform zur hochauflösenden Spektroskopie mit dem erfindungsgemäßen Verfahren. Der Block "Bandbreiteverringerung" entspricht dem gestricheltem Bereich in Figur 4. Durchgezogene Verbindungen entsprechen optischen Fasern, gestrichelte, elektrischen Leitungen,

Figur 8: Ein Diagramm mit einer experimentellen Messung des Spektrums eines mit 10MHz phasenmodulierten Signals. Mit natürlicher SBS Bandbreite (gestrichelte Linie), mit der erfindungsgemäßen Methode auf 8MHz verringerter Bandbreite (durchgezogene Linie), und

Figur 9: Ein Blockdiagramm einer weiteren Ausführungsform zur Quasi-Lichtspeicherung mit Bandbreitenreduktion.

Die verringerte Gewinnbandbreite, normiert auf die natürliche Breite der SBS in Abhängigkeit vom Parameter $d$, zeigt Figur 1 für 19 verschiedene Verhältnisse zwischen Gewinn und Verlust m. Das Verhältnis der erzielten zur natürlichen Bandbreite $\gamma/\gamma_0$ ist auf der vertikalen Achse von Figur 1 aufgetragen und der Frequenzabstand zwischen den Verlustzentren $d = \delta/(2\gamma_0)$ ist auf der horizontalen Achse aufgetragen. Es sind 19 Kurven gezeigt, bei denen das Verhältnis von Gewinn- zu Verlustmaximum m = $g_1/g_0$ 0,1, ...1 beträgt. Die in Figur 1 gezeigten Kurven lassen sich wie folgt beschreiben, wobei die Bereiche $0,1 \leq m \leq 1$ und $0,2 \leq d \leq 2$ betrachtet werden: Für m etwa im Bereich zwischen 0,1 bis 0,4 ist $\gamma/\gamma0$ monoton fallend. Zugleich zeigt sich dabei für die d-Abhängigkeit von $\gamma/\gamma_0$ ein zunächst fallender, dann steigender Verlauf, d.h., bezüglich d existiert ein Minimum. Dessen Lage ist für $m\approx0,1$ ungefähr bei $d\approx1$ und wandert mit steigendem m hin zu kleineren d-Werten bis zu $d\approx0,5$ für m knapp unter 0,5. Für m=0,5 weist $\gamma/\gamma_0$ als Funktion von d kein Minimum mehr auf, wobei die 1. Ableitung dieser Funktion mit d monoton wächst. Für $m\geq0.55$ weist die Kurve von $\gamma/\gamma_0$ als Funktion von d dagegen einen monoton steigenden Verlauf auf, wobei die 1. Ableitung dieser Kurve monoton fallend ist. Dementsprechend kann der Gewinn z.B. auf 50% der natürlichen SBS Bandbreite verringert werden (Punkt 1: $\gamma/\gamma_0\approx0,5$; $d\approx0,6$; $m\approx0,45$), auf 20% (Punkt 2: $\gamma/\gamma_0\approx0,2$; $d\approx0,4$; $m\approx0,55$) oder noch darunter. Auf der anderen Seite verringern die Verluste aber nicht nur die Bandbreite, sondern auch die Höhe des Gewinns, wie Figur 2 zeigt. Die 50% Gewinnbandbreite hat nur noch 33% des maximalen Gewinns, während für Punkt 2 der Gewinn auf nur noch 5% verringert ist.

Das Verhältnis r des erzielten Gewinns zum natürlichen Gewinn (vertikale Achse) in Abhängigkeit vom Frequenzabstand zwischen den Verlustzentren d = $\delta/(2\gamma_0)$ (horizontale Achse) sowie vom Verhältnis von Gewinn- zu Verlustmaximum m = $g_1/g_0$, wie es auch in Figur 2 gezeigt ist, lässt sich etwa wie folgt beschreiben, wobei wiederum die Bereiche $0,1 \leq m \leq 1$ und $0,2 \leq d \leq 2$ betrachtet werden. Es sind 19 Kurven gezeigt, bei denen das Verhältnis von Gewinn- zu Verlustmaximum $m = g_1/g_0$ 0,1, ...1 beträgt. Für alle $m$ im betrachteten Bereich ist r monoton fallend. Für alle d im betrachteten Bereich ist r monoton steigend. Die 1. Ableitung von r als Funktion von d nimmt mit wachsendem m zu.

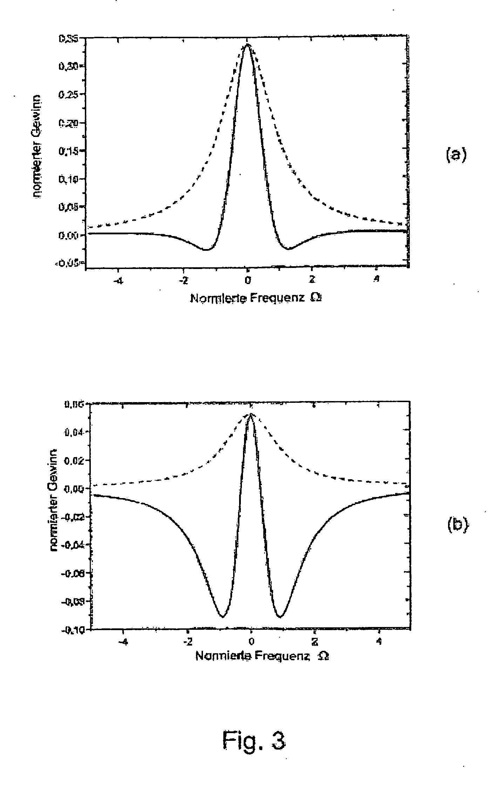

Figur 3 (a) zeigt ein Diagramm mit dem durch Überlagerung mit zwei Verlusten in der Bandbreite reduzierten SBS Gewinn (durchgezogene Linie) im Vergleich zum natürlichen Gewinn (gestrichelte Linie) für d = 0,6 und m = 0,45 für Punkt 1 in Figur 1. Figur 3 (b) zeigt ein gleiches Diagramm für d = 0.4 und m = 0.55 für Punkt 2 in Figur 1. Auf der horizontalen Achse ist eine normierte Frequenz $\Omega$ und auf der vertikalen Achse ist ein normierter Gewinn aufgetragen. Die Brillouin-Bandbreite des Peaks um das Gewinnmaximum ist in beiden Fällen deutlich gegenüber der natürlichen Brillouin-Bandbreite reduziert. Diese Reduktion ist für Punkt 2 noch deutlicher ausgeprägt als für Punkt 1. Dafür sind in beiden Fällen jeweils links und rechts des Maximums Minima ausgeprägt, die einem negativen Gewinn entsprechen. Ein negativer Gewinn bedeutet, dass die in diesen Bereich fallenden spektralen Anteile gedämpft werden. Für einige Anwendungen kann dieses Verhalten zusammen mit dem reduzierten Gewinn von Vorteil sein. Da die SBS ein Verstärkungsprozess ist, wird dem Signal Rauschen hinzugefügt. Die minimale natürliche SBS Bandbreite von 10MHz erhält man z.B. nur bei maximaler Pumpleistung und damit maximalem Rauschen. Die verringerten Gewinne des vorgestellten Verfahrens bedeuten, dass auch das Rauschen verringert wird. Trotzdem wird nur ein sehr schmalbandiger Teil des Spektrums selektiert, da die ungewollten Anteile gedämpft werden.

Für manche Anwendungen kann der verringerte Gewinn nicht ausreichen. In diesen Fällen kann der verringerte Gewinn aber einfach durch höhere Pumpleistungen kompensiert werden.

Wird die Pumpwelle, welche die Verluste erzeugt zusätzlich moduliert, so lässt sich die spektrale Form der Verluste ändern. Haben beide Verluste z.B. im Idealfall eine Rechteckform, so können noch viel größere Bandbreitereduktionen ohne eine Verringerung des Gewinns erzielt werden.

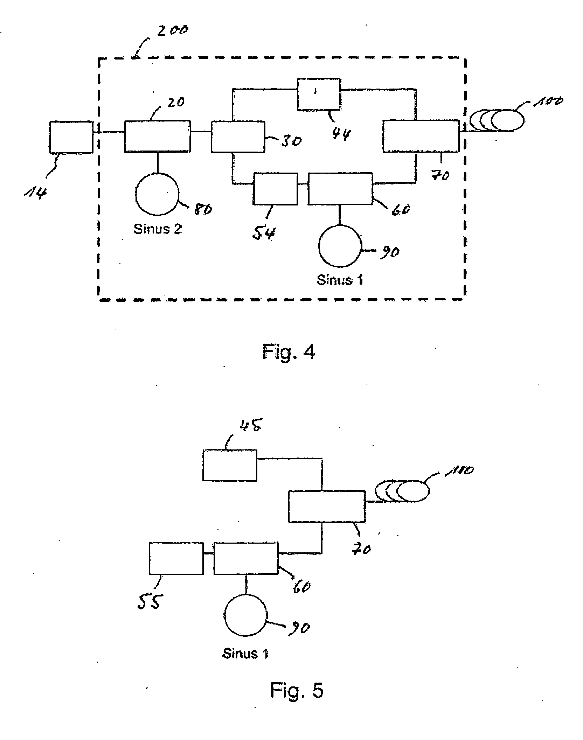

Die Verringerung der SBS Bandbreite lässt sich z.B. aus einer einzigen Quelle mit Hilfe des in Figur 4 gezeigten Aufbaus erzielen. Dabei wird die optische Welle, die durch eine Einrichtung 14 zum Erzeugen einer optischen Welle, vorzugsweise einem Laser, erzeugt wird, zunächst durch einen Modulator 20 moduliert, der hierin auch als zweiter Modulator bezeichnet wird. Dazu eignet sich z.B. ein Mach-Zehnder Modulator der im so genannten suppressed carrier regime betrieben wird. Wird der Modulator 20 mit einem Sinussignal Sinus 2, das von einem Sinusgenerator 80 erzeugt wird, betrieben, so entstehen dadurch zwei optische Wellen im Abstand der Frequenz des Sinussignals vom Träger. Der Träger selbst ist unterdrückt, wenn ein Mach-Zehnder Modulator eingesetzt wird, der im suppressed carrier regime betrieben wird. Wird Sinus 2 mit der Frequenz des SBS-Abstands in der Faser betrieben, so haben die beiden entstehenden Wellen einen Frequenzabstand der zwei Mal dem Abstand der SBS entspricht. Für ein gegenläufiges Signal in der Faser (SSMF) das genau auf der Frequenz des Trägers liegt, würde die eine Welle einen Verlust, die andere hingegen einen Gewinn erzeugen. Als Einrichtung 14 zum Erzeugen einer optischen Welle eignet sich z.B. eine Laserdiode, aber insbesondere auch ein wellenlängenveränderlicher (tunable) Laser. Mit diesem lässt sich das Frequenzzentrum des bandbreiteverringerten SBS-Gewinns beliebig verschieben.

Mit Hilfe eines Kopplers 30, beispielsweise eines 50/50-Kopplers, der hierin auch als zweiter Koppler bezeichnet wird, werden die beiden Wellen auf 2 Pfade aufgeteilt. Im oberen Pfad wird eine der beiden Wellen durch ein Filter 44 herausgefiltert. Dabei kann es sich z.B. um ein Faser Bragg Gitter, oder eine andere Form eines optischen Filters handeln. Dies ist die Welle die den Gewinn in der Faser (SSMF) erzeugt. Die Welle für die Verluste befindet sich im unteren Pfad nach der Filterung durch das Filter 54. Da zwei Verluste benötigt werden, wird die resultierende Welle durch einen Modulator 60, der hierin auch als erster Modulator bezeichnet wird, mit einem weiteren Sinussignal Sinus 1, das von einem Sinusgenerator 90 erzeugt wird, moduliert. Da der Modulator 60 in diesem Beispiel ein Mach-Zehnder Modulator ist, der im suppressed carrier regime betrieben wird, entstehen zwei Wellen mit einem Abstand der doppelten Frequenz des Sinussignals Sinus 1. Die Pumpwelle für den Gewinn des oberen Pfads wird mit den beiden Wellen für die Verluste des unteren Pfads durch einen Koppler 70, vorzugsweise einem variablen Koppler, der hierin auch als erster Koppler bezeichnet wird, zusammengefügt und kann dann z.B. in eine Faser 100, vorzugsweise eine SSMF Faser, eingespeist werden. Der Parameter d der oben genannten Gleichung (2) wird durch die Frequenz des Sinussignals (Sinus 1) und der Parameter m durch den Koppler 70 bestimmt. Der Parameter m kann alternativ oder zusätzlich auch mit Hilfe von optischen Verstärkern, beispielsweise Erbium-dotierten Faserverstärkern, die beispielsweise nach dem Filter 44 im oberen Pfad und/oder dem Filter 54 im unteren Pfad geschaltet werden, eingestellt werden. Daher kann mit diesem Aufbau 200 zur Verringerung der SBS Bandbreite jede beliebige Bandbreite der Figur 1 variabel eingestellt werden.

Eine Alternative ist in Figur 5 gezeigt. Dabei stehen zwei optische Wellen aus den Einrichtungen zum Bereitstellen optischer Wellen 45 bzw. 55, vorzugsweise Laserdioden oder durchstimmbare Laser, zur Verfügung. Wobei deren Frequenzabstand so gewählt werden, dass die erste Einrichtung 45 den Gewinn und die zweite Einrichtung 55 einen Verlust erzeugt. Zwei Verluste werden wieder durch eine Modulation mit einem Modulator 60, der hierin auch als erster Modulator bezeichnet wird, vorzugsweise einem Mach-Zehnder-Modulator betrieben im "suppressed carrier regime", realisiert. Der Modulator erhält ein Sinussignal (Sinus 1) von einem Sinusgenerator 90. Auch hier kann wieder jede beliebige Bandbreite der Figur 1 variabel eingestellt werden, da der Parameter d durch die Frequenz des Sinussignals (Sinus 1) und der Parameter m durch den Koppler 70, vorzugsweise einem variablen Koppler, bestimmt wird. Der Parameter m kann alternativ oder zusätzlich auch in diesem Beispiel mit Hilfe von optischen Verstärkern, beispielsweise Erbium-dotierten Faserverstärkern eingestellt werden, die hinter die erste und/oder zweite Einrichtung 45 bzw. 55 zum Bereitstellen von optischen Wellen geschaltet werden,

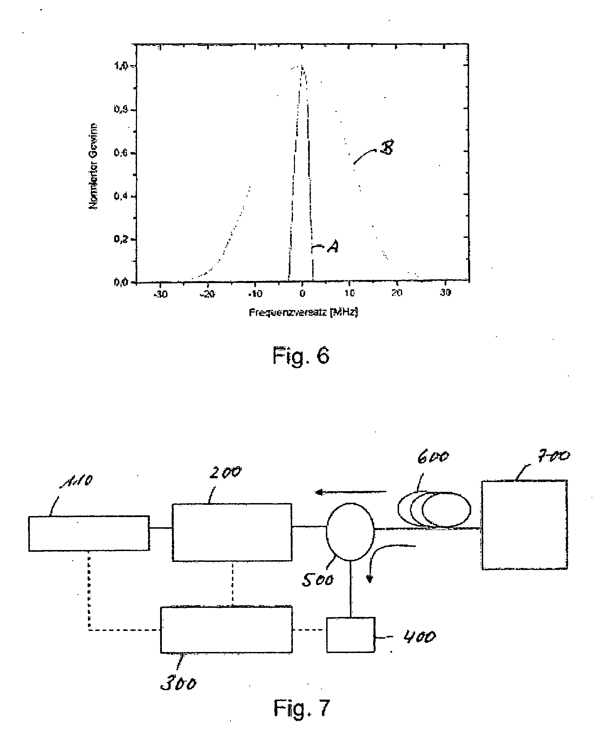

Figur 6 zeigt die experimentellen Ergebnisse eines mit einem derartigen Aufbau reduzierten Gewinns von etwa 3.4MHz (Kurve A) im Vergleich zum natürlichen SBS-Gewinn von etwa 20MHz (Kurve B). Daher kann mit diesem Aufbau zur Verringerung der SBS Bandbreite in einer optischen Faser 100 jede beliebige Bandbreite der Figur 1 variabel eingestellt werden.

Die vorliegende Erfindung kann vorteilhaft eingesetzt werden bei der hochauflösenden Spektroskopie für optische und Terahertzsignale und schmalbandige Millimeterwellen- und Terahertz-Filter. Bei der hochauflösenden Spektroskopie [2,3] wird die geringe Bandbreite der SBS dazu genutzt, das unbekannte Spektrum eines optischen Signals zu bestimmen. Dieselbe Methode eignet sich auch zur hochgenauen Bestimmung des Spektrums von Millimeter- und Terahertzsignalen [7]. Dazu wird das Signal zunächst aus dem Radio- oder Terahertz-Bereich in den optischen Bereich transformiert und dann mit obiger Methode das Spektrum gemessen. Die Auflösung der Messung hängt direkt von der Bandbreite der SBS ab und kann daher mit der vorgeschlagenen Methode drastisch erhöht werden. Einen möglichen Aufbau zeigt Figur 7.

Eine Einrichtung zum Bereitstellen einer optischen Welle 110, beispielsweise ein tunable Laser, wird dazu benutzt, die Wellenlänge der optischen Welle zu verändern. Wie beim bereits bekannten Verfahren, breitet sich die Pumpwelle in der einen Richtung (hier von links nach rechts) und das unbekannte Spektrum, das aus einer Einrichtung 700 in eine optische Faser 600 eingeleitet wird, in der anderen Richtung (hier von rechts nach links), in der optischen Faser 600 (SSMF) aus. Die Pumpwelle erzeugt dementsprechend über die SBS einen Gewinn der den Teil des unbekannten Spektrums verstärkt, der in seine Bandbreite passt. Dieser wird über den Zirkulator 500 zu einem Detektor 400, beispielsweise einer Photodiode PD, ausgekoppelt. Dieser Detektor bestimmt seine Intensität. Zur Messung des Spektrums wird die Wellenlänge der optischen Welle, die mittels der Einrichtung 110 zum Bereitstellen einer optischen Welle erzeugt wird, verändert, so dass der Gewinn durch das unbekannte Spektrum geschoben wird. Die Intensität am Detektor 400 in Abhängigkeit von der Wellenlänge des mittels der Einrichtung 110 zum Bereitstellen einer optischen Welle erzeugten optischen Welle bestimmt dann das unbekannte Spektrum, welches mit der Steuer- und Auswerteeinheit 300 ermittelt und angezeigt werden kann. Im Gegensatz zu der bereits bekannten Methode sorgt hier die Bandbreiteverringerung 200 (entspricht beispielsweise dem gestrichelten Bereich aus Figur 4) für eine einstellbare Breite des Gewinns und damit für eine Vergrößerung der möglichen Auflösung.

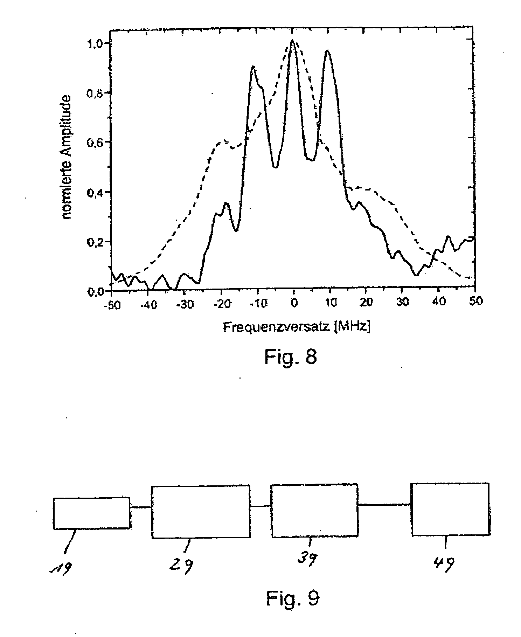

Die experimentelle Messung eines mit 10MHz phasenmodulierten Signals zeigt die Figur 8. Das mit der natürlichen SBS-Bandbreite gemessene Signal ist als gestrichelte Linie dargestellt. Da die natürliche SBS-Bandbreite mit 20MHz viel größer ist als der Abstand der Seitenbänder des Signals, erkennt man nur ein breites Spektrum ohne jede Feinstruktur. Die Breite entspricht dabei der Auflösung des Spektrometers und nicht dem Spektrum. Als durchgezogene Linie ist eine Messung an demselben Signal dargestellt, jetzt allerdings mit einem durch die hier vorgeschlagen Methode auf 8MHz reduzierten SBS-Gewinn. Deutlich heben sich die erwarteten Seitenbänder des Signals bei +-10 und +-20MHz ab und die Feinstruktur des Spektrums lässt sich erkennen. Die hier dargestellte Messung zeigt deutlich die verbesserten Eigenschaften bei Einsatz des erfindungsgemäßen Verfahrens. Es können weitere deutliche Verbesserungen der Auflösung und des Dynamikbereichs erzielt werden.

Derselbe Aufbau lässt sich benutzen, um sehr schmale Frequenzanteile aus einem optischen Spektrum herauszuschneiden, bzw. ein Spektrum zu manipulieren [4]. Auch Millimeter- und Terahertzsignale lassen sich mit obiger Methode mit hoher Auflösung filtern bzw. verändern, wenn das Signal aus dem Radiofrequenz- in den optischen Bereich transformiert, verändert und wieder zurück transformiert wird. Die Vorteile dies im optischen zu tun liegen in den geringen Verlusten, hoher Bandbreite, Immunität gegenüber Interferenzen, leichte Abstimmbarkeit und der einfachen Rekonfigurierbarkeit [10]. Mit der hier beschriebenen Methode lässt sich die Auflösung dieser Filter drastisch verbessern.

Die vorliegende Erfindung kann weiterhin vorteilhaft eingesetzt werden bei der Quasi-Lichtspeicherung. Bei der Quasi-Lichtspeicherung (QLS) werden äquidistante, schmalbandige Spektralanteile aus dem Spektrum eines optischen Pakets herausgeschnitten [5, 6]. Nach den Gesetzen der Fouriertransformation folgt aus der Abtastung im Spektralbereich ein Kopieren des Signals im Zeitbereich. Eine dieser Kopien wird dann im Zeitbereich herausgeschnitten, so dass das gesamte System wie ein Speicher wirkt. Die maximale Speicherzeit ist dabei invers proportional zur Bandbreite der herausgeschnittenen spektralen Anteile. Die hier vorgeschlagene Methode kann daher also die maximal mögliche Speicherzeit der QLS drastisch erhöhen. Den entsprechenden Aufbau zeigt Figur 9:

Dabei wird die QLS genau so durchgeführt wie beim bereits bekannten System. Dazu wird ein Frequenzkamm mittels einer Einrichtung 39 zur Frequenzkammerzeugung erzeugt und im QLS-System 49 eine Multiplikation dieses Kamms mit dem Spektrum des Pakets durchgeführt. Hier wird lediglich die Bandbreite der herausgeschnittenen Teile verringert und damit die maximale Speicherzeit erhöht. Das geschieht mit Hilfe einer Einrichtung 29 entsprechend des in Figur 4 gezeigten gestrichelten Bereichs 200 zur Bandbreitenreduktion und einer Einrichtung 19 zum Bereitstellen einer optischen Welle.

Durch die hier beschriebene Erfindung kann die Bandbreite der SBS auf einfache Weise abstimmbar verringert werden. Dies bedeutet eine drastische Verbesserung für alle darauf beruhenden Anwendungen sowohl im optischen als auch im Millimeterwellen- und Terahertz-Bereich. Dementsprechend wird die Auflösung für Spektrometer und Filter vergrößert und die maximale Speicherzeit für optische Pakete kann gesteigert werden.

Gerade Millimeterwellen- und Terahertz-Signale lassen sich im optischen Bereich mit viel geringeren Verlusten und höherer Bandbreite manipulieren als im elektrischen. Gleichzeitig bietet der optische Bereich Immunität gegenüber Interferenzen, leichte Abstimmbarkeit und eine einfache Rekonfigurierbarkeit.

**Literatur**

[1] T. Schneider, Nonlinear Optics in Telecommunications, Springer New York (2004)

[2] T. Schneider, Electron. Lett. 41, 1234 (2005)

[3] J. M. S. Domingo et al., IEEE Phot. Technol. Lett. 17, 855 (2005)

[4] A. R. Chraplyvy, R.W. Tkach, Electron. Lett. 22, 1084 (1986)

[5] S. Preußler, K. Jamshidi, A. Wiatrek, R. Henker, C. Bunge and T. Schneider, Opt. Express 17, 15790 (2009)

[6] T. Schneider, K. Jamshidi, S. Preußler, JLT 28, 2586 (2010)

[7] K. Xu et al., Laser Physics 20, 820 (2010)

[8] A. Yeniay, J. Delavaux, and J. Toulouse, JLT 20, 1425 (2002)

[9] T. Schneider, R. Henker, K. Lauterbach, M. Junker Opt. Express 16, 8280 (2008)

[10] J. Capmany et al., JLT 24, 201 (2006)

**Patentansprüche**

1.  Verfahren zur Verringerung der Bandbreite stimulierter Brillouin-Streuung (SBS) bei der Frequenz $\omega_0$ in einer optischen Faser, die eine natürliche Brillouin-Verschiebung $\omega_B$ aufweist, mit den Schritten:

    Bereitstellen einer ersten optischen Welle der Frequenz $\omega_P = \omega_0 + \omega_B$ mit einer ersten Einrichtung,
    Leiten der ersten optischen Welle zu einem ersten Eingang eines ersten Kopplers, der einen Ausgang aufweist, der mit der genannten optischen Faser verbindbar ist,
    Bereitstellen einer zweiten optischen Welle der Frequenz $\omega'_P = \omega_0 - \omega_B$ mit einer zweiten Einrichtung,
    Leiten der zweiten optischen Welle zu einem ersten Modulator,
    Transformieren der zweiten optischen Welle mit dem ersten Modulator in eine dritte, um den Frequenzunterschied $\delta/2$ nach oben verschobene optische Welle der Frequenz $\omega'_P + \delta/2$ und eine vierte, um den Frequenzunterschied $\delta/2$ nach unten verschobene optische Welle der Frequenz $\omega'_P - \delta/2$,
    Leiten der dritten optischen Welle und der vierten optischen Welle zu einem zweiten Eingang des ersten Kopplers, wobei
    der erste Koppler die erste optische Welle, die dritte optische Welle und die vierte optische Welle an dessen Ausgang ausgibt,
    **gekennzeichnet durch**:

    Einstellen des Frequenzunterschieds $\delta/2$, so dass:

    ein Verhältnis d des Frequenzabstands $\delta$ zu der natürlichen Brillouin-Bandbreite $\gamma_0$ in dem Bereich $0,3 \le d \le 0,9$ liegt, und
    beim Anschluss der optischen Faser am Ausgang des ersten Kopplers in der optischen Faser die Superposition

    des Spektrums des **durch** die erste optische Welle erzeugten SBS Gewinns mit einem Gewinnmaximum $g_0$ und
    des Spektrums des **durch** die dritte optische Welle erzeugten SBS Verlusts mit einem Verlustmaximum $g_1$ und
    des Spektrums des **durch** die vierte optische Welle erzeugten SBS Verlusts mit einem Verlustmaximum $g'_1$

    ein Gesamtspektrum liefert, das eine kleinere Bandbreite $\gamma$ aufweist als die natürliche Brillouin-Bandbreite $\gamma_0$.

2.  Verfahren nach Anspruch 1 mit dem weiteren Schritt:

    Einstellen des Verhältnisses der Intensität der ersten optischen Welle zur Intensität der dritten optischen Welle und des Verhältnisses der Intensität der ersten optischen Welle zur Intensität der vierten optischen Welle, so dass ein bestimmtes Verhältnis m des Gewinnmaximums $g_0$ zu dem Verlustmaximum $g_1$ bzw. $g'_1$ eingestellt wird und
    das Gesamtspektrum eine bestimmte Bandbreite $\gamma$ aufweist.

3.  Verfahren nach einem der vorangehenden Ansprüche, wobei
    das Verhältnis m des Gewinnmaximums $g_0$ zu dem Verlustmaximum $g_1$ in dem Bereich $0,1 \le m \le 1,0$, vorzugsweise $0,3 \le m \le 0,8$ eingestellt wird.

4.  Verfahren nach einem der vorangehenden Ansprüche, wobei das Bereitstellen der ersten optischen Welle und das Bereitstellen der zweiten optischen Welle mit den folgenden Schritten erfolgt:

    Bereitstellen einer optischen Welle der Frequenz $\omega_0$ und

Leiten dieser optischen Welle zu einem zweiten Modulator, der geeignet ist, eine optische Welle der Frequenz $\omega_0$ in ein Signal zu transformieren, das die erste optische Welle der Frequenz $\omega_P = \omega_0 + \omega_B$ und die zweite optische Welle der Frequenz $\omega'_P = \omega_0 - \omega_B$ aufweist,

Leiten des Signals vom zweiten Modulator zu einem zweiten Koppler, der die Leistung des Signals in einen ersten und einen zweiten Anteil aufteilt, und

Leiten des ersten Signalanteils zu einem ersten Filter, durch den die erste optische Welle passieren kann, und

Leiten des zweiten Signalteils zu einem zweiten Filter, durch den die zweite optische Welle passieren kann.

5. Verfahren zur schmalbandigen optischen Filterung mit den Schritten:

Erzeugen der ersten optischen Welle, der dritten optischen Welle und der vierten optischen Welle mit einem Verfahren nach einem der vorangehenden Ansprüche,

Einspeisen der ersten optischen Welle, der dritten optischen Welle und der vierten optischen Welle in einen Zirkulator,

wobei der Zirkulator mit einem Anschluss mit einem ersten Ende einer optischen Faser verbunden ist, die eine natürliche Brillouin-Verschiebung $\omega_B$ aufweist, und

wobei der Zirkulator einen weiteren Anschluss aufweist und geeignet ist, den Frequenzbereich eines Signals, das in der optischen Faser durch die SBS verstärkt wird, auszukoppeln,

Einspeisen eines zu filternden Signals in ein zweites Ende der optischen Faser.

6. Verfahren zur schmalbandigen Filterung im Millimeterwellen- oder Terahertz-Bereich mit den Schritten:

Transformieren eines Signals aus dem Millimeterwellen-Bereich oder dem Terahertz-Bereich in den optischen Bereich,

Filtern des in den optischen Bereich transformierten Signals mit dem Verfahren nach Anspruch 5, und

Transformieren des gefilterten Signals in den Millimeterwellen- oder Terahertz-Bereich.

7. Verfahren zur hochauflösenden optischen Spektroskopie mit
optischem Filtern eines schmalbandigen Bereichs aus einem optischen Spektrum mit dem Verfahren nach Anspruch 5 und mit den Schritten:

Steuern der Frequenz der optischen Welle,

Detektieren des gefilterten Signals mit einem Detektor, vorzugsweise einer Photodiode, die mit dem weiteren Anschluss des Zirkulators verbunden ist,

Auswerten der mit dem Detektor gemessenen Intensität des ausgekoppelten Signals in Abhängigkeit von der Frequenz der optischen Welle;

oder mit den Schritten:

Steuern der Frequenz der ersten optischen Welle und der Frequenz der zweiten optischen Welle,

Detektieren des gefilterten Signals mit einem Detektor, vorzugsweise einer Photodiode, die mit dem weiteren Anschluss des Zirkulators verbunden ist,

Auswerten der mit dem Detektor gemessenen Intensität des ausgekoppelten Signals in Abhängigkeit von der Frequenz der ersten oder zweiten optischen Welle.

8. Verfahren zur hochauflösenden Spektroskopie im Millimeterwellen- oder Terahertz-Bereich mit:

Transformieren eines Millimeterwellen- oder Terahertz-Signals in den optischen Bereich,

Spektroskopieren des transformierten Signals mit dem Verfahren nach Anspruch 7.

9. Verfahren zur Quasi-Lichtspeicherung mit den Schritten:

Erzeugen eines schmalbandigen Gewinnspektrums mit einem Filter nach einem der Ansprüche 5 oder 6,

Erzeugen eines schmalbandigen Gewinnkamms aus dem schmalbandigen Gewinnspektrum durch einen Frequenzkammgenerator,

Einspeisen des Gewinnkamms in ein System zur Quasi-Lichtspeicherung.

10. Vorrichtung zur Verringerung der Bandbreite stimulierter Brillouin-Streuung (SBS) bei der Frequenz $\omega_0$ in einer

optischen Faser, die eine natürliche Brillouin-Verschiebung $\omega_B$ aufweist insbesondere zur Durchführung eines Verfahrens nach einem der Ansprüche 1 bis 4, mit:

einer ersten Einrichtung zum Bereitstellen einer ersten optischen Welle der Frequenz $\omega_P = \omega_0 + \omega_B$,

einem ersten Koppler mit einem ersten Eingang, an den die erste optische Welle geleitet wird, und einem Ausgang, der mit der genannten optischen Faser verbindbar ist,

einer zweiten Einrichtung zum Bereitstellen einer zweiten optischen Welle der Frequenz $\omega'_P = \omega_0 - \omega_B$,

einem ersten Modulator, an den die zweite optische Welle geleitet wird, wobei der erste Modulator die zweite optische Welle transformiert in eine dritte, um den Frequenzunterschied $\delta/2$ nach oben verschobene optische Welle der Frequenz $\omega'_P + \delta/2$ und eine vierte, um den Frequenzunterschied $\delta/2$ nach unten verschobene optische Welle der Frequenz $\omega'_P - \delta/2$,

wobei die dritte optische Welle und die vierte optische Welle zu einem zweiten Eingang des ersten Kopplers geleitet werden, und

der erste Koppler die erste optische Welle, die dritte optische Welle und die vierte optische Welle an dessen Ausgang ausgibt,

**gekennzeichnet durch**,

eine Einrichtung, die zum Einstellen eines Frequenzunterschieds $\delta/2$ konfiguriert ist, so dass:

ein Verhältnis d des Frequenzabstands $\delta$ zu der natürlichen Brillouin-Bandbreite $\gamma_0$ in dem Bereich $0{,}3 \leq d \leq 0{,}9$ liegt, und

beim Anschluss der optischen Faser am Ausgang des ersten Kopplers in der optischen Faser die Superposition

des Spektrums des **durch** die erste optische Welle erzeugten SBS Gewinns mit einem Gewinnmaximum $g_0$ und

des Spektrums des **durch** die dritte optische Welle erzeugten SBS Verlusts mit einem Verlustmaximum $g_1$ und

des Spektrums des **durch** die vierte optische Welle erzeugten SBS Verlusts mit einem Verlustmaximum $g'_1$

ein Gesamtspektrum liefert, das eine kleinere Bandbreite $\gamma$ aufweist als die natürliche Bandbreite $\gamma_0$ eines Spektrums.

**11.** Vorrichtung nach Anspruch 10, wobei der erste Koppler variabel ist und/oder mit mindestens einem einstellbaren optischen Verstärker, vorzugsweise einem Erbium-dotierten Faserverstärker, durch den die erste und/oder zweite sowie dritte optische Welle zum ersten Eingang bzw. zum zweiten Eingang des ersten Kopplers geleitet werden, zum Einstellen des Verhältnisses der Intensität der ersten optischen Welle zur Intensität der dritten optischen Welle und des Verhältnisses der Intensität der ersten optischen Welle zur Intensität der vierten optischen Welle.

**12.** Vorrichtung nach Anspruch 10 oder 11, wobei
die Einrichtung, die zum Einstellen des Frequenzunterschieds $\delta/2$ konfiguriert ist, einen Sinusgenerator aufweist, dessen Frequenz einstellbar ist und der ein Sinussignal an den ersten Modulator ausgibt, wobei der erste Modulator vorzugsweise durch einen Mach-Zehnder-Modulator realisiert wird, der im "suppressed carrier regime" betrieben wird.

**13.** Vorrichtung nach einem der Ansprüche 10 bis 12, mit:

einer Einrichtung zum Bereitstellen einer optischen Welle der Frequenz $\omega_0$,

einem zweiten Modulator, der die optische Welle empfängt und geeignet ist, die optische Welle der Frequenz $\omega_0$ in ein Signal zu transformieren, das die erste optische Welle der Frequenz $\omega_P = \omega_0 + \omega_B$ und die zweite optische Welle der Frequenz $\omega'_P = \omega_0 - \omega_B$ aufweist,

einem zweiten Koppler, der das transformierte Signal in einen ersten und einen zweiten Signalanteil aufteilt, und

einem ersten Filter, durch den die erste optische Welle passieren kann, und

einem zweiten Filter, durch den die zweite optische Welle passieren kann, wobei vorzugsweise

die Einrichtung zum Bereitstellen der optischen Welle abstimmbar ist bezüglich der Frequenz $\omega_0$, und/oder vorzugsweise mit einer Einrichtung zum Einstellen der Frequenz $\omega_B$, die vorzugsweise einen Sinusgenerator aufweist, dessen Frequenz einstellbar ist und der ein Sinussignal an den zweiten Modulator ausgibt, wobei der zweite Modulator vorzugsweise durch einen Mach-Zehnder-Modulator realisiert wird, der im "suppressed carrier regime" betrieben wird.

14. Vorrichtung nach einem der Ansprüche 10 bis 13, wobei die Einrichtung zum Bereitstellen einer optischen Welle der Frequenz $\omega_0$, die erste Einrichtung zum Bereitstellen der ersten optischen Welle und/oder die zweite Einrichtung zum Bereitstellen der zweiten optischen Welle eine Laserdiode oder einen Laser aufweist.

15. Vorrichtung nach einem der Ansprüche 10 bis 14, wobei
die Verbindung zwischen der ersten Einrichtung zum Bereitstellen der ersten optischen Welle und dem ersten Eingang des ersten Kopplers und/oder
die Verbindung zwischen der zweiten Einrichtung zum Bereitstellen der zweiten optischen Welle zum ersten Modulator und/oder
die Verbindung zwischen dem ersten Modulator und dem zweiten Eingang des ersten Kopplers und/oder
die Verbindung zwischen dem zweiten Modulator und dem zweiten Koppler und/oder
die Verbindung zwischen dem zweiten Koppler und dem ersten Filter und/oder
die Verbindung zwischen dem zweiten Koppler und dem zweiten Filter
jeweils eine optische Faser aufweist.

16. Schmalbandiger optischer Filter mit:

einem abstimmbaren Laser, der eine optische Welle der Frequenz $\omega_0$ erzeugt,
einer Vorrichtung nach einem der Ansprüche 13 bis 15, die mit dem abstimmbaren Laser verbunden ist und die optische Welle der Frequenz $\omega_0$ erhält,
einem Zirkulator, der mit einem Ausgang der Vorrichtung nach einem der Ansprüche 13 bis 15 verbunden ist, und wobei der Zirkulator mit einem Anschluss mit einem ersten Ende einer optischen Faser verbindbar ist, die eine natürliche Brillouin-Verschiebung $\omega_0$ aufweist, wobei in ein zweites Ende der optischen Faser ein optisches Signal eingespeist werden kann,
und wobei der Zirkulator einen weiteren Anschluss aufweist und geeignet ist, den Frequenzbereich des Signals, der in der optischen Faser durch die SBS verstärkt wird, auszukoppeln.

17. Schmalbandiger Millimeterwellen- oder Terahertz-Filter mit dem schmalbandigen optischen Filter nach Anspruch 16 mit:

einer Einrichtung zum Transformieren eines Signals aus dem Millimeterwellen-Bereich oder dem Terahertz-Bereich in den optischen Bereich,
wobei das in den optischen Bereich transformierte Signal mit Hilfe des schmalbandigen optischen Filters gefiltert wird, und
einer Einrichtung zum Transformieren des gefilterten Signals in den Millimeterwellen- oder Terahertz-Bereich.

18. Hochauflösendes optisches Spektroskop mit dem optischen Filter nach Anspruch 16 mit:

einem Detektor, vorzugsweise einer Photodiode, die mit dem weiteren Anschluss des Zirkulators verbunden ist, einer Steuer- und Auswerteeinheit, die mit dem abstimmbaren Laser, der Vorrichtung nach einem der Ansprüche 13 bis 15 und dem Detektor elektrisch verbunden ist,
wobei die Steuer- und Auswerteeinheit die Frequenz $\omega_0$ der vom Laser ausgegebenen optischen Welle steuert und die mit dem Detektor gemessene Intensität des ausgekoppelten Signals auswertet.

19. Hochauflösendes Spektroskop für den Millimeterwellen- oder Terahertz-Bereich mit dem hochauflösenden optischen Spektroskop nach Anspruch 18, mit einer Einrichtung zum Transformieren eines Millimeterwellen- oder Terahertz-Signals in den optischen Bereich.

20. Vorrichtung zur Quasi-Lichtspeicherung mit einem Filter nach einem der Ansprüche 16 oder 17 mit einer Einrichtung zum Erzeugen eines schmalbandigen Gewinnkamms aus dem gefilterten Signal und einem System zur Quasi-Lichtspeicherung.

**Claims**

1. A method for reducing the bandwidth of stimulated Brillouin scattering (SBS) at the frequency $\omega_0$ in an optical fiber having a natural Brillouin shift $\omega_B$, comprising the steps of:

providing a first optical wave of the frequency $\omega_P = \omega_0 + \omega_B$ by means of a first means,
conducting the first optical wave to a first input of a first coupler having an output that can be connected to said optical fiber,
providing a second optical wave of the frequency $\omega'_P = \omega_0 - \omega_B$ by means of a second means,
conducting the second optical wave to a first modulator,
transforming the second optical wave by means of the first modulator into a third optical wave of the frequency $\omega'_P + \delta/2$, which is shifted upwardly by the frequency difference $\delta/2$, and into a fourth optical wave of the frequency $\omega'_P - \delta/2$, which is shifted downwardly by the frequency difference $\delta/2$,
conducting the third optical wave and the fourth optical wave to a second input of the first coupler, wherein the first coupler outputs the first optical wave, the third optical wave and the fourth optical wave at its output, **characterized by**:

adjusting the frequency difference $\delta/2$ so that:

a ratio d of the frequency distance $\delta$ relative to the natural Brillouin bandwidth $\gamma_0$ lies in the range of $0.3 \leq d \leq 0.9$, and
when connecting the optical fiber at the output of the first coupler, in the optical fiber the superposition of the spectrum of the SBS gain generated by the first optical wave with a gain maximum $g_0$ and of the spectrum of the SBS loss generated by the third optical wave with a loss maximum $g_1$ and of the spectrum of the SBS loss generated by the fourth optical wave with a loss maximum $g'_1$ leads to an overall spectrum having a smaller bandwidth $\gamma$ than the natural Brillouin bandwidth $\gamma_0$.

2. The method according to claim 1, comprising the further step of:

adjusting the ratio of the intensity of the first optical wave relative to the intensity of the third optical wave and the ratio of the intensity of the first optical wave relative to the intensity of the fourth optical wave, so that a specific ratio m of the gain maximum $g_0$ relative to the loss maximum $g_1$ or $g'_1$ is adjusted and the overall spectrum has a specific bandwidth $\gamma$.

3. The method according to any one of the preceding claims, wherein the ratio m of the gain maximum $g_0$ relative to the loss maximum $g_1$ is adjusted in the range of $0.1 \leq m \leq 1.0$, preferably $0.3 \leq m \leq 0.8$.

4. The method according to any one of the preceding claims, wherein the provision of the first optical wave and the provision of the second optical wave are carried out by the following steps:

providing an optical wave of the frequency $\omega_0$ and
conducting said optical wave to a second modulator which is suitable for transforming an optical wave of the frequency $\omega_0$ into a signal having the first optical wave of the frequency $\omega_P = \omega_0 + \omega_B$ and the second optical wave of the frequency $\omega'_P = \omega_0 - \omega_B$,
conducting the signal from the second modulator to a second coupler dividing the power of the signal into a first part and a second part, and
conducting the first signal part to a first filter through which the first optical wave can pass and
conducting the second signal part to a second filter through which the second optical wave can pass.

5. A method for narrow-band optical filtering, comprising the steps of:

generating the first optical wave, the third optical wave and the fourth optical wave by means of a method according to any one of the preceding claims,
feeding the first optical wave, the third optical wave and the fourth optical wave into a circulator,
wherein the circulator is connected with one port to a first end of an optical fiber having a natural Brillouin shift $\omega_B$, and
wherein the circulator has a further port and is suitable for decoupling the frequency range of a signal which is amplified in the optical fiber by the SBS,
feeding a signal to be filtered into a second end of the optical fiber.

6. A method for narrow-band filtering in the millimeter wave range or terahertz range, comprising the steps of:

transforming a signal from the millimeter wave range or the terahertz range into the optical range,
filtering the signal transformed into the optical range by means of the method according to claim 5, and
transforming the filtered signal into the millimeter wave range or terahertz range.

7. A method for high-resolution optical spectroscopy comprising
optically filtering a narrow-band range from an optical spectrum by means of the method according to claim 5 and comprising the steps of:

controlling the frequency of the optical wave,
detecting the filtered signal by means of a detector, preferably a photodiode, which is connected to the further port of the circulator,
evaluating the intensity of the decoupled signal measured by means of the detector depending on the frequency of the optical wave;

or by means of the steps:

controlling the frequency of the first optical wave and the frequency of the second optical wave,
detecting the filtered signal by means of a detector, preferably a photodiode, which is connected to the further port of the circulator,
evaluating the intensity of the decoupled signal measured by means of the detector depending on the frequency of the first or the second optical wave.

8. A method for high-resolution spectroscopy in the millimeter wave range or terahertz range, comprising:

transforming a millimeter wave signal or terahertz signal into the optical range,
spectroscoping the transformed signal by means of the method according to claim 7.

9. A method for quasi-light-storage, comprising the steps of:

generating a narrow-band gain spectrum by means of a filter according to any one of claim 5 or 6,
generating a narrow-band gain comb from the narrow-band gain spectrum by means of a frequency comb generator,
feeding the gain comb into a system for quasi-light-storage.

10. A device for reducing the bandwidth of stimulated Brillouin scattering (SBS) at the frequency $\omega_0$ in an optical fiber having a natural Brullouin shift $\omega_B$, in particular for carrying out a method according to any one of claims 1 to 4, comprising:

a first means for providing a first optical wave of the frequency $\omega_P = \omega_0 + \omega_B$,
a first coupler having a first input to which the first optical wave is guided and an output which can be connected to said optical fiber,
a second means for providing a second optical wave of the frequency $\omega'_P = \omega_0 - \omega_B$,
a first modulator to which the second wave is guided, wherein the first modulator transforms the second optical wave into a third optical wave of the frequency $\omega'_P + \delta/2$, which is shifted upwardly by the frequency difference $\delta/2$, and into a fourth optical wave of the frequency $\omega'_P - \delta/2$, which is shifted downwardly by the frequency difference $\delta/2$,
wherein the third optical wave and the fourth optical wave are conducted to a second input of the first coupler, and the first coupler outputs the first optical wave, the third optical wave and the fourth optical wave at its output,
**characterized by**
a means configured for adjusting a frequency difference $\delta/2$ so that:

a ratio d of the frequency distance $\delta$ relative to the natural Brillouin bandwidth $\gamma_0$ lies in the range of $0.3 \leq d \leq 0.9$, and
when connecting the optical fiber to the output of the first coupler, in the optical fiber the superposition
of the spectrum of the SBS gain generated by the first optical wave with a gain maximum $g_0$ and
of the spectrum of the SBS loss generated by the third optical wave with a loss maximum $g_1$ and

of the spectrum of the SBS loss generated by the fourth optical wave with a loss maximum $g'_1$
leads to an overall spectrum having a smaller bandwidth $\gamma$ than the natural bandwidth $\gamma_0$ of a spectrum.

11. The device according to claim 10, wherein the first coupler is variable and/or with at least one adjustable optical amplifier, preferably an erbium doped fiber amplifier, by means of which the first and/or the second as well as the third optical wave can be guided to the first input and/or to the second input of the first coupler, for adjusting the ratio of the intensity of the first optical wave relative to the intensity of the third optical wave and the ratio of the intensity of the first optical wave relative to the intensity of the fourth optical wave.

12. The device according to claim 10 or 11, wherein
the means which is configured for adjusting the frequency difference $\delta/2$ comprises a sine generator whose frequency is adjustable and which outputs a sine signal to the first modulator, wherein the first modulator is preferably realized by a Mach-Zehnder modulator operated in the "suppressed carrier regime".

13. The device according to any one of claims 10 to 12, comprising:

a means for providing an optical wave of the frequency $\omega_0$,
a second modulator which receives the optical wave and which is suitable for transforming the optical wave of the frequency $\omega_0$ into a signal having the first optical wave of the frequency $\omega_P = \omega_0 + \omega_B$ and the second optical wave of the frequency $\omega'_P = \omega_0 - \omega_B$,
a second coupler which divides the transformed signal into a first and a second signal part, and
a first filter through which the first optical wave can pass, and
a second filter through which the second optical wave can pass,
wherein preferably
the means for providing the optical wave is adjustable with respect to the frequency $\omega_0$ and/or
preferably with a means for adjusting the frequency $\omega_B$, which preferably comprises a sine generator whose frequency is adjustable and which outputs a sine signal to the second modulator, wherein the second modulator is preferably realized by a Mach-Zehnder modulator operated in the "suppressed carrier regime".

14. The device according to any one of claims 10 to 13, wherein the means for providing an optical wave of the frequency $\omega_0$, the first means for providing the first optical wave and/or the second means for providing the second optical wave comprise(s) a laser diode or a laser.

15. The device according to any one of claims 10 to 14, wherein
the connection between the first means for providing the first optical wave and the first input of the first coupler and/or
the connection between the second means for providing the second optical wave to the first modulator and/or
the connection between the first modulator and the second input of the first coupler and/or
the connection between the second modulator and the second coupler and/or
the connection between the second coupler and the first filter and/or
the connection between the second coupler and the second filter
each comprise(s) an optical fiber.

16. A narrow-band optical filter comprising:

an adjustable laser which generates an optical wave of the frequency $\omega_0$,
a means according to any one of claims 13 to 15, which is connected to the adjustable laser and receives the optical wave of the frequency $\omega_0$,
a circulator which is connected to the output of the device according to any one of claims 13 to 15, and
wherein the circulator can be connected with a port to a first end of an optical fiber having a natural Brillouin shift $\omega_0$,
wherein an optical signal can be fed into a second end of the optical fiber,
and wherein the circulator comprises a further port and is suitable for decoupling the frequency range of the signal which is amplified in the optical fiber by the SBS.

17. A narrow-band millimeter wave filter or terahertz filter comprising the narrow-band filter according to claim 16, comprising:

a means for transforming a signal from the millimeter wave range or the terahertz range into the optical range, wherein the signal transformed into the optical range is filtered by means of the narrow-band optical filter, and

a means for transforming the filtered signal into the millimeter wave range or terahertz range.

18. A high-resolution optical spectroscope comprising the optical filter according to claim 16, comprising:

a detector, preferably a photodiode, which is connected to the further port of the circulator,
a control and evaluation unit which is electrically connected to the adjustable laser, the device according to any one of claims 13 to 15 and the detector,
wherein the control and evaluation unit controls the frequency $\omega_0$ of the optical wave output by the laser and evaluates the intensity of the decoupled signal measured by means of the detector.

19. A high-resolution spectroscope for the millimeter wave range or terahertz range with the high-resolution optical spectroscope according to claim 18, comprising a means for transforming a millimeter wave signal or terahertz signal into the optical range.

20. A device for quasi-light-storage comprising a filter according to any one of claim 16 or 17, comprising a means for generating a narrow-band gain comb from the filtered signal and a system for quasi-light-storage.

**Revendications**

1. Procédé de réduction de la largeur de bande d'une diffusion Brillouin simulée (SBS) à la fréquence $\omega_0$ dans une fibre optique qui présente un décalage Brillouin naturel $\omega_B$, comprenant les étapes :

fournir une première onde optique de la fréquence $\omega_P = \omega_0 + \omega_B$ avec un premier dispositif,
conduire la première onde optique vers la première entrée d'un premier coupleur qui présente une sortie qui peut être reliée à ladite fibre optique,
fournir une deuxième onde optique de la fréquence $\omega'_P = \omega_0 - \omega_B$ avec un deuxième dispositif,
conduire la deuxième onde optique vers un premier modulateur,
transformer la deuxième onde optique avec le premier modulateur en une troisième onde optique de la fréquence $\omega'_P + \delta/2$, décalée vers le haut de la différence de fréquence $\delta/2$ et une quatrième onde optique de la fréquence $\omega'_P - 5/2$, décalée vers le bas de la différence de fréquence $\delta/2$,
conduire la troisième onde optique et la quatrième onde optique vers une deuxième entrée du premier coupleur,
le premier coupleur émettant la première onde optique, la troisième onde optique et la quatrième onde optique à sa sortie,
**caractérisé par** :

l'ajustement de la différence de fréquence $\delta/2$ de sorte que :

un rapport d de l'écart de fréquences $\delta$ par rapport à la largeur de bande Brillouin naturelle $\gamma_0$ se situe dans la plage $0,3 \leq d \leq 0,9$, et
lors du raccordement de la fibre optique à la sortie du premier coupleur, la superposition dans la fibre optique
du spectre du gain SBS généré par la première onde optique avec un maximum de gain $g_0$ et
du spectre de la perte SBS générée par la troisième onde optique avec un maximum de perte $g_1$ et
du spectre de la perte SBS générée par la quatrième onde optique avec un maximum de perte $g'_1$
donne un spectre d'ensemble qui présente une largeur de bande $\gamma$ qui est plus petite que la largeur de bande Brillouin naturelle $\gamma_0$.

2. Procédé selon la revendication 1 comprenant l'étape supplémentaire :

ajuster le rapport de l'intensité de la première onde optique à l'intensité de la troisième onde optique et le rapport de l'intensité de la première onde optique à l'intensité de la quatrième onde optique,
de sorte qu'un rapport m déterminé du maximum de gain $g_0$ au maximum de perte $g_1$ ou encore $g'_1$ est ajusté et que le spectre d'ensemble présente une largeur de bande déterminée $\gamma$.

3. Procédé selon l'une quelconque des revendications précédentes, le rapport m du maximum de gain $g_0$ au maximum de perte $g_1$ étant ajusté dans la plage $0,1 \leq m \leq 1,0$, de préférence plage $0,3 \leq m \leq 0,8$.

4. Procédé selon l'une quelconque des revendications précédentes, la fourniture de la première onde optique et la fourniture de la deuxième onde optique ayant lieu avec les étapes suivantes :

fournir une onde optique de la fréquence $\omega_0$ et
conduire cette onde optique vers un deuxième modulateur qui est approprié pour transformer une onde optique de la fréquence $\omega_0$ en un signal qui présente la première onde optique de la fréquence $\omega_P = \omega_0 + \omega_B$ et la deuxième onde optique de la fréquence $\omega'_P = \omega_0 - \omega_B$,
conduire le signal du deuxième modulateur vers un deuxième coupleur qui divise la puissance du signal en une première et une deuxième fraction, et
conduire la première fraction de signal vers un premier filtre par lequel la première onde optique peut passer, et conduite la deuxième fraction de signal vers un deuxième filtre par lequel la deuxième onde optique peut passer.

5. Procédé de filtrage optique à bande étroite comprenant les étapes :

générer la première onde optique, la troisième onde optique et la quatrième onde optique avec un procédé selon l'une quelconque des revendications précédentes,
injecter la première onde optique, la troisième onde optique et la quatrième onde optique dans un circulateur, le circulateur étant relié par un raccordement à une première extrémité d'une fibre optique qui présente un décalage Brillouin naturel $\omega_B$, et
le circulateur présente un deuxième raccordement et étant approprié pour découpler la plage de fréquences d'un signal qui est amplifié dans la fibre optique par le SBS,
injecter un signal à filtrer dans une deuxième extrémité de la fibre optique.

6. Procédé de filtrage à bande étroite dans le domaine des ondes millimétriques ou des térahertz comprenant les étapes :

transformer un signal du domaine des ondes millimétriques ou des térahertz dans le domaine optique,
filtrer le signal transformé dans le domaine optique avec le procédé selon la revendication 5, et
transformer le signal filtré dans le domaine des ondes millimétriques ou des térahertz.

7. Procédé de spectroscopie optique à haute résolution comprenant
un filtrage optique d'une plage à bande étroite d'un spectre optique avec le procédé selon la revendication 5 et comprenant les étapes :

commander la fréquence de l'onde optique,
détecter le signal filtré avec un détecteur, de préférence une photodiode qui est reliée au raccordement supplémentaire du circulateur,
évaluer l'intensité du signal découplé mesurée avec le détecteur en fonction de la fréquence de l'onde optique ;

ou comprenant les étapes :

commander la fréquence de la première onde optique et la fréquence de la deuxième onde optique ;
détecter le signal filtré avec un détecteur, de préférence une photodiode qui est reliée au raccordement supplémentaire du circulateur,
évaluer l'intensité du signal découplé mesurée avec le détecteur en fonction de la fréquence de la première ou deuxième onde optique.

8. Procédé de spectroscopie à haute résolution dans le domaine des ondes millimétriques ou des térahertz comprenant :

transformer un signal d'ondes millimétriques ou de térahertz dans le domaine optique,
effectuer une spectroscopie du signal transformé avec le procédé selon la revendication 7.

9. Procédé de stockage de quasi-lumière comprenant les étapes :

générer un spectre de gain à bande étroite avec un filtre selon l'une des revendications 5 ou 6,
générer un peigne de gain à bande étroite à partir du spectre de gain à bande étroite par un générateur de peigne de fréquence,

injecter le peigne de gain dans un système de stockage de quasi-lumière.

10. Dispositif de réduction de la largeur de bande d'une diffusion Brillouin simulée (SBS) à la fréquence $\omega_0$ dans une fibre optique qui présente un décalage Brillouin naturel $\omega_B$, en particulier pour mettre en oeuvre un procédé selon l'une quelconque des revendications 1 à 4, comprenant :

un premier dispositif pour fournir une première onde optique de la fréquence $\omega_P = \omega_0 + \omega_B$,
un premier coupleur ayant une première entrée à laquelle la première onde optique est conduite et une sortie qui peut être reliée à ladite fibre optique,
un deuxième dispositif pour fournir une deuxième onde optique de la fréquence $\omega'_P = \omega_0 - \omega_B$,
un premier modulateur auquel la deuxième onde optique est conduite, le premier modulateur transformant la deuxième onde optique en une troisième onde optique de la fréquence $\omega'_P + \delta/2$, décalée vers le haut de la différence de fréquence $\delta/2$, et une quatrième onde optique de la fréquence $\omega'_P - \delta/2$, décalée vers le bas de la différence de fréquence $\delta/2$,
la troisième onde optique et la quatrième onde optique étant conduites vers une deuxième entrée du premier coupleur, et
le premier coupleur émettant la première onde optique, la troisième onde optique et la quatrième onde optique à sa sortie,
**caractérisé par**
un dispositif qui est configuré pour ajuster une différence de fréquence $\delta/2$ de sorte que :

un rapport d de l'écart de fréquences $\delta$ par rapport à la largeur de bande Brillouin naturelle $\gamma_0$ se situe dans la plage $0,3 \leq d \leq 0,9$, et
lors du raccordement de la fibre optique à la sortie du premier coupleur, la superposition dans la fibre optique du spectre du gain SBS généré par la première onde optique avec un maximum de gain $g_0$ et du spectre de la perte SBS générée par la troisième onde optique avec un maximum de perte $g_1$ et du spectre de la perte SBS générée par la quatrième onde optique avec un maximum de perte $g'_1$ donne un spectre d'ensemble qui présente une largeur de bande $\gamma$ qui est plus petite que la largeur de bande Brillouin naturelle $\gamma_0$.

11. Dispositif selon la revendication 10, dans lequel le premier coupleur est variable et/ou le dispositif comprend au moins un amplificateur optique, de préférence un amplificateur à fibre dopée à l'erbium, par lequel la première et/ou la deuxième ainsi que la troisième onde optique sont conduites vers la première entrée ou encore vers la deuxième entrée du premier coupleur pour ajuster le rapport de l'intensité de la première onde optique à l'intensité de la troisième onde optique et le rapport de l'intensité de la première onde optique à l'intensité de la quatrième onde optique.

12. Dispositif selon la revendication 10 ou 11, dans lequel le dispositif qui est configuré pour ajuster la différence de fréquence $\delta/2$ présente un générateur d'ondes sinusoïdales dont la fréquence est ajustable et qui envoie un signal sinusoïdal au premier modulateur, le premier modulateur étant réalisé de préférence par un modulateur Mach-Zehnder qui fonctionne en « régime de porteuse supprimée ».

13. Dispositif selon l'une quelconque des revendications 10 à 12, comprenant :

un dispositif pour fournir une onde optique de la fréquence $\omega_0$,
un deuxième modulateur qui reçoit l'onde optique et est approprié pour transformer l'onde optique de la fréquence $\omega_0$ en un signal qui présente la première onde optique de la fréquence $\omega_P = \omega_0 + \omega_B$ et la deuxième onde optique de la fréquence $\omega'_P = \omega_0 - \omega_B$,
un deuxième coupleur qui divise le signal transformé en une première fraction de signal et une deuxième fraction de signal, et
un premier filtre par lequel la première onde optique peut passer, et
un deuxième filtre par lequel la deuxième onde optique peut passer,
le dispositif pour fournir l'onde optique pouvant de préférence être accordé relativement à la fréquence $\omega_0$, et/ou comprenant de préférence un dispositif pour ajuster la fréquence $\omega_B$, lequel présente de préférence un générateur d'ondes sinusoïdales dont la fréquence peut être ajustée et qui envoie un signal sinusoïdal au deuxième modulateur, le deuxième modulateur étant réalisé de préférence par un modulateur Mach-Zehnder qui fonctionne en « régime de porteuse supprimée ».

**14.** Dispositif selon l'une quelconque des revendications 10 à 13, dans lequel le dispositif pour fournir une onde optique de la fréquence $\omega_0$, le premier dispositif pour fournir la première onde optique et/ou le deuxième dispositif pour fournir la deuxième onde optique présentent une diode laser ou un laser.

**15.** Dispositif selon l'une quelconque des revendications 10 à 14, dans lequel
la liaison entre le premier dispositif pour fournir la première onde optique et la première entrée du premier coupleur et/ou
la liaison entre le deuxième dispositif pour fournir la deuxième onde optique et le premier modulateur et/ou
la liaison entre le premier modulateur et la deuxième entrée du premier coupleur et/ou
la liaison entre le deuxième modulateur et le deuxième coupleur et/ou
la liaison entre le deuxième coupleur et le premier filtre et/ou
la liaison entre le deuxième coupleur et le deuxième filtre
présente chaque fois une fibre optique

**16.** Filtre optique à bande étroite comprenant :

un laser accordable qui génère une onde optique de la fréquence $\omega_0$,
un dispositif selon l'une quelconque des revendications 13 à 15, qui est relié au laser accordable et reçoit l'onde optique de la fréquence $\omega_0$,
un circulateur qui est relié à une sortie du dispositif selon l'une quelconque des revendications 13 à 15, et
le circulateur pouvant être relié par un raccordement à une première extrémité d'une fibre optique qui présente un décalage Brillouin naturel $\omega_0$, un signal optique pouvant être injecté dans une deuxième extrémité de la fibre optique,
et le circulateur présentant un autre raccordement et étant approprié pour découpler la plage de fréquences du signal qui est amplifié dans la fibre optique par le SBS.

**17.** Filtre d'ondes millimétriques ou de térahertz à bande étroite comprenant le filtre optique à bande étroite selon la revendication 16 comprenant :

un dispositif pour transformer un signal du domaine des ondes millimétriques ou des térahertz dans le domaine optique,
le signal transformé dans le domaine optique étant filtré à l'aide du filtre optique à bande étroite, et
un dispositif pour transformer le signal filtré dans le domaine des ondes millimétriques ou des térahertz.

**18.** Spectroscope optique à haute résolution comprenant le filtre optique selon la revendication 16 comprenant :

un détecteur, de préférence une photodiode qui est reliée au raccordement supplémentaire du circulateur,
une unité de commande et d'évaluation qui est reliée électriquement au laser accordable, au dispositif selon l'une quelconque des revendications 13 à 15 et au détecteur,
l'unité de commande et d'évaluation commandant la fréquence $\omega_0$ de l'onde optique émise par le laser et évaluant l'intensité du signal découplé mesurée avec le détecteur.

**19.** Spectroscope optique à haute résolution pour le domaine des ondes millimétriques ou des térahertz comprenant le spectroscope optique à haute résolution selon la revendication 18, comprenant un dispositif pour transformer un signal d'ondes millimétriques ou un signal de térahertz dans le domaine optique.

**20.** Dispositif de stockage de quasi-lumière comprenant un filtre selon l'une quelconque des revendications 16 ou 17 comprenant un dispositif pour générer un peigne de gain à bande étroite à partir du signal filtré et un système de stockage de quasi-lumière.

Fig. 1

Fig. 2

(a)

(b)

Fig. 3

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009067973 A1

- DE 102007058049 A1


**In der Beschreibung aufgeführte Nicht-Patentliteratur**

- **T. SCHNEIDER ; R. HENKER ; K. LAUTERBACH ; M. JUNKER.** Comparison of delay enhancement mechanisms for SBS-based slow light systems. *Opt. Express,* 2007, vol. 15 (15), 9606
- **T. SCHNEIDER.** Nonlinear Optics in Telecommunications. Springer, 2004
- **T. SCHNEIDER.** *Electron. Lett.,* 2005, vol. 41, 1234
- **J. M. S. DOMINGO et al.** *IEEE Phot. Technol. Lett.,* 2005, vol. 17, 855
- **A. R. CHRAPLYVY ; R.W. TKACH.** *Electron. Lett.,* 1986, vol. 22, 1084

- **S. PREUßLER ; K. JAMSHIDI ; A. WIATREK ; R. HENKER ; C. BUNGE ; T. SCHNEIDER.** *Opt. Express,* 2009, vol. 17, 15790
- **T. SCHNEIDER ; K. JAMSHIDI ; S. PREUßLER.** *JLT,* 2010, vol. 28, 2586
- **K. XU et al.** *Laser Physics,* 2010, vol. 20, 820
- **A. YENIAY ; J. DELAVAUX ; J. TOULOUSE.** *JLT,* 2002, vol. 20, 1425
- **T. SCHNEIDER ; R. HENKER ; K. LAUTERBACH ; M. JUNKER.** *Opt. Express,* 2008, vol. 16, 8280
- **J. CAPMANY et al.** *JLT,* 2006, vol. 24, 201